(19) Europäisches Patentamt / European Patent Office / Office européen des brevets

(11) **EP 4 711 405 A1**

(12) **EUROPEAN PATENT APPLICATION**
published in accordance with Art. 153(4) EPC

(43) Date of publication:
**18.03.2026  Bulletin 2026/12**

(21) Application number: **24823059.1**

(22) Date of filing: **28.03.2024**

(51) International Patent Classification (IPC):
*C08J 9/16* (2006.01)

(52) Cooperative Patent Classification (CPC):
**C08J 9/16**

(86) International application number:
**PCT/JP2024/012704**

(87) International publication number:
**WO 2024/257436 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023  JP 2023099444**

(71) Applicant: **JSP Corporation
Tokyo 100-0005 (JP)**

(72) Inventors:
• **SAKAMURA Takumi
  Kanuma-shi, Tochigi 322-0014 (JP)**
• **OHTA Hajime
  Yokkaichi-shi, Mie 510-0881 (JP)**

(74) Representative: **Kramer Barske Schmidtchen
Patentanwälte PartG mbB
European Patent Attorneys
Landsberger Strasse 300
80687 München (DE)**

(54) **POLYPROPYLENE RESIN FOAMED PARTICLES AND METHOD FOR MANUFACTURING SAME**

(57)    A polypropylene-based resin expanded bead (1) has a tubular shape with a through-hole (11) penetrating through an inside in an axial direction thereof. An average hole diameter d of the through-hole (11) in the expanded bead (1) is less than 1 mm, and a ratio d/D of the average hole diameter d of the through-hole (11) to an average outer diameter (D) of the expanded bead (1) is 0.4 or less. The expanded bead (1) has a foamed core layer (2) made of a polypropylene-based resin and a cover layer (3) made of a polyolefin-based resin and covering a side peripheral surface of the foamed core layer (2). The foamed core layer (2) and the cover layer (2) each contain a coloring pigment. A melt mass flow rate $MFR_S$ of the polyolefin-based resin constituting the cover layer (3), as measured under conditions of a temperature of 230°C and a load of 2.16 kg in accordance with JIS K7210-1: 2014, is higher than 15 g/10 min.

FIG. 3

EP 4 711 405 A1

## Description

TECHNICAL FIELD

The present invention relates to a polypropylene-based resin expanded bead and a method for producing the same.

BACKGROUND ART

Polypropylene-based resin expanded beads molded articles are lightweight and have excellent cushioning properties, rigidity, and the like, and therefore are used in various applications. Such a polypropylene-based resin expanded beads molded article is produced by, for example, a method called in-mold molding method in which polypropylene-based resin expanded beads are filled in a mold and then heated with steam supplied into the mold. In the in-mold molding method, steam is supplied into the mold, thereby secondarily expanding the expanded beads and melting surfaces of the expanded beads. Thus, the expanded beads in the mold are mutually fusion-bonded, thereby enabling a molded article having a shape corresponding to the cavity shape of the mold to be obtained. A molded article immediately after molding tends to swell by secondary expansion, and therefore is cooled with water, air, and the like in the mold, and then released from the mold.

In recent years, applications of expanded beads molded articles have broadened, and an expanded beads molded article containing a coloring pigment and having a colored appearance is sometimes required. For example, Patent Literature 1 has described, as a polypropylene-based resin expanded bead capable of forming such an expanded beads molded article, a polypropylene-based resin expanded bead which contains carbon black as a colorant and which is obtained by foaming (expanding) a tubular polypropylene-based resin particle having a through-hole in two steps. An expanded beads molded article formed with a polypropylene-based resin expanded bead obtained by a method of Patent Literature 1 has a high degree of blackness and reduced color unevenness.

PRIOR ART LITERATURE

Patent Literature

Patent Literature 1: JP-A-2023-57790

SUMMARY OF INVENTION

PROBLEMS TO BE SOLVED BY INVENTION

However, on closer inspection of an expanded beads molded article molded using polypropylene-based resin expanded beads obtained by a method of Patent Literature 1, a streak pattern was sometimes observed on the surface of the molded article. Although such a streak pattern has no effect on mechanical properties of the molded article, it has been desired to suppress the occurrence of the streak patterns depending on the application of the molded article from the viewpoint of further improvement of the appearance of the molded article.

The present invention has been made in view of such a background, and an object thereof is to provide a polypropylene-based resin expanded bead capable of forming an expanded beads molded article with reduced streak patterns and a favorable appearance, and a method for producing the same.

MEANS FOR SOLVING PROBLEM

One aspect of the present invention is a polypropylene-based resin expanded bead according to the following [1] to [10].

[1] A polypropylene-based resin expanded bead having a tubular shape with a through-hole that penetrates through an inside in an axial direction thereof, wherein

an average hole diameter d of the through-hole of the expanded bead is less than 1 mm,
a ratio d/D of the average hole diameter d of the through-hole to an average outer diameter D of the expanded bead is 0.4 or less,
the expanded bead has

a foamed core layer made of a polypropylene-based resin, and

a cover layer made of a polyolefin-based resin and covering a side peripheral surface of the foamed core layer,

the foamed core layer and the cover layer each contain a coloring pigment, and

a melt mass flow rate $MFR_S$ of the polyolefin-based resin constituting the cover layer, as measured under conditions of a temperature of 230°C and a load of 2.16 kg in accordance with JIS K7210-1: 2014, is higher than 15 g/10 min.

[2] The polypropylene-based resin expanded bead according to [1], wherein an average circularity Cb of an outer peripheral edge of the expanded bead is 0.95 or more in a cut surface obtained by cutting the expanded bead at a position where the expanded bead has a maximum cross-sectional area in a plane perpendicular to the axial direction.

[3] The polypropylene-based resin expanded bead according to [1] or [2], wherein an amount of the coloring pigment contained in the foamed core layer is 0.1 mass% or more and 5 mass% or less, and an amount of the coloring pigment contained in the cover layer is 0.1 mass% or more and 5 mass% or less.

[4] The polypropylene-based resin expanded bead according to any one of [1] to [3], wherein the coloring pigment contained in the foamed core layer is carbon black, and the coloring pigment contained in the cover layer is carbon black.

[5] The polypropylene-based resin expanded bead according to any one of [1] to [4], wherein a melt mass flow rate MFRc of the polypropylene-based resin constituting the foamed core layer, as measured under conditions of a temperature of 230°C and a load of 2.16 kg in accordance with JIS K7210-1: 2014, is 5 g/min or more and 12 g/min or less.

[6] The polypropylene-based resin expanded bead according to any one of [1] to [5], wherein a ratio $MFR_S/MFR_C$ of the melt mass flow rate $MFR_S$ of the polyolefin-based resin constituting the cover layer to a melt mass flow rate $MFR_C$ of the polypropylene-based resin constituting the foamed core layer, as measured under conditions of a temperature of 230°C and a load of 2.16 kg in accordance with JIS K7210-1: 2014, is 2 or more and 5 or less.

[7] The polypropylene-based resin expanded bead according to any one of [1] to [6], wherein an average wall thickness t of the expanded bead is 1.2 mm or more and 2 mm or less.

[8] The polypropylene-based resin expanded bead according to any one of [1] to [7], wherein an apparent density of the expanded bead is 10 kg/m$^3$ or more and 100 kg/m$^3$ or less.

[9] The polypropylene-based resin expanded bead according to any one of [1] to [8], wherein an average circularity Cp of the through-hole is 0.90 or more in a cut surface obtained by cutting the expanded bead at a position where the expanded bead has a maximum cross-sectional area in a plane perpendicular to the axial direction.

[10] The polypropylene-based resin expanded bead according to any one of [1] to [9], wherein, in a cut surface obtained by cutting the expanded bead at a position where the expanded bead has a maximum cross-sectional area in a plane perpendicular to the axial direction, a ratio Cb/Cp of an average circularity Cb of an outer peripheral edge of the expanded bead to an average circularity Cp of the through-hole of the expanded bead is 0.96 or more and 1.05 or less.

Another aspect of the present invention consists in a method for producing a polypropylene-based resin expanded bead according to the following [11].

[10] A method for producing a polypropylene-based resin expanded bead having a tubular shape with a through-hole that penetrates through an inside in an axial direction thereof, the method including:

a granulation step of obtaining a multilayer resin particle including a core layer made of a polypropylene-based resin and having a tubular shape with a through-hole that penetrates through an inside in an axial direction thereof, and a cover layer made of a polyolefin-based resin and covering a side peripheral surface of the core layer; and

a foaming step of foaming the multilayer resin particle to obtain the expanded bead, after the granulation step, wherein an average hole diameter dr of the through-hole of the multilayer resin particle is less than 0.25 mm,

a ratio dr/Dr of the average hole diameter dr of the through-hole to an average outer diameter Dr of the multilayer resin particle is 0.4 or less,

the core layer and the cover layer each contain a coloring pigment, and

a melt mass flow rate $MFR_S$ of the polyolefin-based resin constituting the cover layer, as measured under conditions of a temperature of 230°C and a load of 2.16 kg in accordance with JIS K7210-1: 2014, is higher than 15 g/10 min.

EFFECTS OF INVENTION

The above aspects can provide a polypropylene-based resin expanded bead capable of forming an expanded beads molded article with reduced streak patterns and a favorable appearance, and a method for producing the same.

BRIEF DESCRIPTION OF DRAWINGS

[FIG. 1] FIG. 1 is a perspective view of an expanded bead.
[FIG. 2] FIG. 2 is a cross-sectional view of the expanded bead of FIG. 1, in a cross section passing through the center axis of the expanded bead.
[FIG. 3] FIG. 3 is a cross-sectional view taken along line III-III in FIG. 2.
[FIG. 4] FIG. 4 is a perspective view illustrating one example of an expanded bead having a groove on a side peripheral surface.
[FIG. 5] FIG. 5 is a cross-sectional view taken along line V-V in FIG. 4.
[FIG. 6] FIG. 6 is an explanatory diagram illustrating a method for calculating an area of a high-temperature peak.
[FIG. 7] FIG. 7 is a plan view schematically illustrating a surface of a molded article.
[FIG. 8] FIG. 8 is a photograph showing an appearance of an expanded beads molded article of Example 1.
[FIG. 9] FIG. 9 is a photograph showing an appearance of an expanded beads molded article of Comparative Example 3.

MODE FOR CARRYING OUT INVENTION

(Polypropylene-based resin expanded bead)

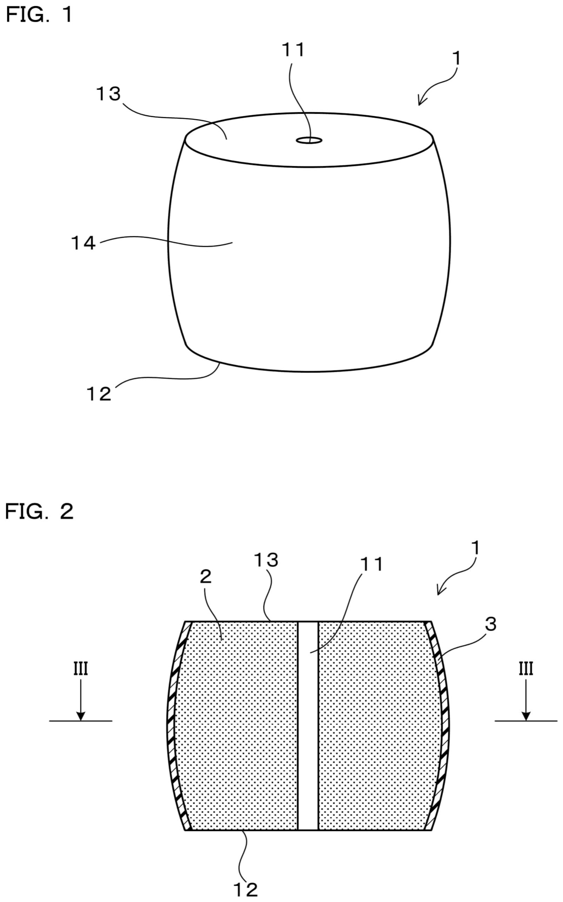

A polypropylene-based resin expanded bead 1 (hereinafter, also referred to as "expanded bead 1", or simply "expanded bead".) has a tubular shape with a through-hole 11 penetrating through the inside of the expanded bead in the axial direction, as shown in FIG. 1. More specifically, the expanded bead 1 has a bottom surface 12, a top surface 13 placed above the bottom surface 12 and including substantially the same shape as the bottom surface 12, and a side peripheral surface 14 connecting an edge of the bottom surface 12 and an edge of the top surface 13. As shown in FIG. 2, the through-hole 11 penetrates through the inside of the expanded bead 1 in the axial direction, and opens at the bottom surface 12 and the top surface 13. The tubular shape described above includes, for example, a cylinder and a rectangular tube as shown in FIG. 1. The number of such through-holes 11 included in the expanded bead 1 may be one or more.

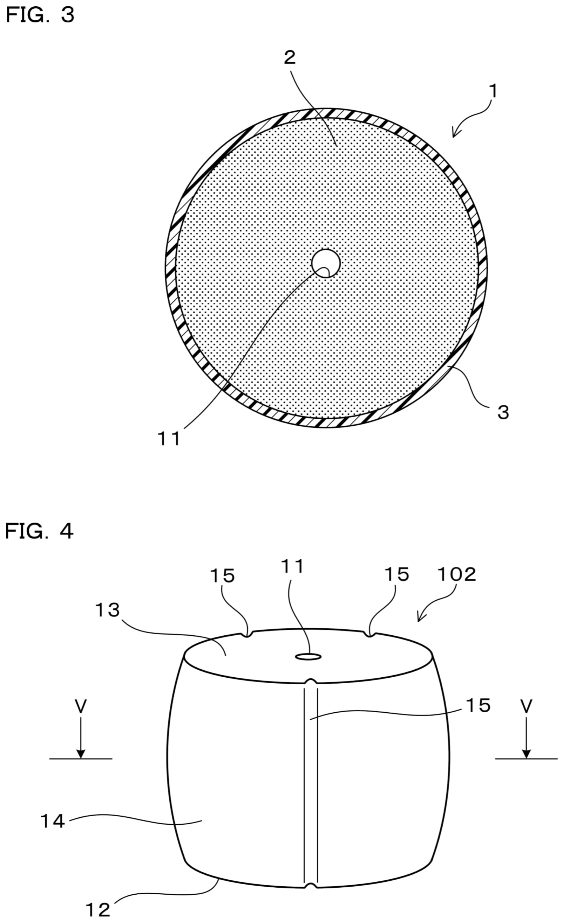

As shown in FIG. 2 and FIG. 3, the expanded bead 1 has a foamed core layer 2 made of a polypropylene-based resin, and a cover layer 3 made of a polyolefin-based resin and covering a side peripheral surface of the foamed core layer 2. The cover layer 3 is provided on an outer surface of the expanded bead. The foamed core layer 2 and the cover layer 3 each contain a coloring pigment. The melt mass flow rate $MFR_S$ of the polyolefin-based resin constituting the cover layer is higher than 15 g/10 min. By covering the side peripheral surface of the foamed core layer of the expanded bead with the cover layer made of a polyolefin-based resin having a high melt mass flow rate $MFR_S$, formation of streak patterns on a surface of a polypropylene-based resin expanded beads molded article (hereinafter also referred to as "molded article") can be suppressed. In addition, by using a polyolefin-based resin having a high melt mass flow rate $MFR_S$ for the cover layer, formation of streak patterns formed on a surface of the molded article can be suppressed without impairing the rigidity of the foamed core layer. Therefore, using the expanded bead can maintain the rigidity of the molded article and suppress a streak pattern from being formed. More specific configurations of the foamed core layer 2 and the cover layer 3 are described later.

[Average hole diameter d of through-hole]

The average hole diameter d of the through-hole of the expanded bead is less than 1 mm. By setting the average hole diameter d of the through-hole to less than 1 mm, the moldability of the expanded bead can be enhanced and a polypropylene-based resin expanded beads molded article having excellent surface properties and rigidity can be obtained. In addition, by setting the average hole diameter d of the through-hole to less than 1 mm, a molded article exhibiting inconspicuous color unevenness, having a desired shape, and having excellent surface properties and rigidity can be obtained even if an aging step is omitted. From the viewpoint of more reliably obtaining such effects, the average hole diameter d of the through-hole is more preferably 0.95 mm or less, still more preferably 0.92 mm or less, particularly preferably 0.90 mm or less, and most preferably 0.85 mm or less. The above-mentioned "aging step" refers to a step of leaving a molded article released from a mold to stand for a predetermined time under a high-temperature atmosphere adjusted to a temperature of about 60°C to 80°C during the production process of the molded article.

In a case where the average hole diameter d of the through-hole is too large, there is a possibility that an excessively long time is required to dry the molded article. Further, there is a possibility that unevenness or the like derived from gaps between expanded beads or through-holes may easily be formed on a surface of the molded article, and that the rigidity of the molded article may be reduced.

The average hole diameter d of the through-hole is preferably 0.1 mm or more. In this case, it is possible to prevent the through-hole of the expanded bead from being crushed and closed, thereby allowing the effects of the through-hole to be more reliably exhibited during in-mold molding. The average hole diameter d of the through-hole is more preferably 0.2 mm or more, still more preferably 0.3 mm or more, particularly preferably 0.4 mm or more, and most preferably 0.5 mm or more from the same viewpoint.

In order to configure a preferred range of the average hole diameter d of the through-hole, the upper limit and the lower limit of the above average hole diameter d of the through-hole can be arbitrarily combined. A preferred range of the average hole diameter d of the through-hole may be, for example, 0.1 mm or more and less than 1 mm, 0.2 mm or more and 0.95 mm or less, 0.3 mm or more and 0.92 mm or less, 0.4 mm or more and 0.90 mm or less, or 0.5 mm or more and 0.85 mm or less.

The reason why the above effects are obtained by setting the average hole diameter d of the through-hole within the specified range is considered to be as follows, for example. When the expanded beads are in-mold molded, an open cell structure composed of open cells, namely, a minute space portion communicated with the outside of the molded article is formed in the molded article. The open cell structure is specifically formed by a complex connection of voids, including voids formed by mutual communication of through-holes of the expanded beads, voids formed by communication of the through-holes of the expanded beads with gaps between the expanded beads, voids formed by communication of gaps between the expanded beads, an open cell portion of the expanded beads constituting the molded article.

The open cell structure communicates with the outside of the molded article. Therefore, when a molded article having a moderate open cell content is released from a mold, it is considered that outside air rapidly flows into the cells inside the molded article through the open cell structure. Such inflow of outside air into the cells inside the molded article allows the internal pressure of the entire molded article to be rapidly balanced with the pressure of the atmosphere outside of the molded article. As a result, it is considered that the dimensions of the molded article are likely to stabilize quickly and the molded article can be prevented from being significantly shrunk or deformed even when no aging step is performed.

Further, the expanded beads have the through-holes. Therefore, when steam is supplied into the mold, it is considered that steam can pass through the through-hole. For this reason, it is considered that steam can easily reach the inside of the mold, so that all the expanded beads in the mold can be easily heated. Accordingly, a molded article having excellent fusion bondability and a favorable appearance can be obtained even under a low molding temperature condition during in-mold molding. Consequently, the amount of heat received by the expanded beads from steam during in-mold molding can be kept low. The temperature inside the molded article after release can be prevented from becoming excessively high. As a result, it is considered that the dimensions of the molded article after in-mold molding are likely to stabilize quickly.

In a case where the expanded bead does not have a through-hole, the molding temperature tends to become high, and a sufficient open cell structure is hardly formed in the resulting molded article. Therefore, in this case, it is difficult to suppress significant shrinkage, deformation, or the like of the molded article when the aging step is omitted. In addition, in this case, there is a possibility that the secondary expandability of the expanded bead is excessively high and the cooling time in the mold becomes longer.

The average hole diameter d of the through-hole of the expanded bead is determined as follows. First, the expanded bead is cut at a position where the expanded bead has a maximum cross-sectional area, in a plane perpendicular to the axial direction, thereby exposing a cut surface as shown in FIG. 3. Next, a photograph of the cut surface is taken, and the cross-sectional area (specifically, the opening area) of the through-hole 11 in the cut surface is calculated. The diameter of a virtual true circle having the same area as the cross-sectional area of the through-hole 11 is then calculated, and this value is taken as the hole diameter of the through-hole of each expanded bead. It is noted that the position where the expanded bead has a maximum cross-sectional area can be specified, for example, by 3D scanning of the outer shape of the expanded bead.

The above operation is performed for 50 or more expanded beads 1, and the arithmetic average value of the hole diameters of the through-holes 11 of these expanded beads 1 is defined as the average hole diameter d of the through-hole. Even when the cross-sectional area of the through-hole 11 of each expanded bead 1 is not uniform in the axial direction, the average hole diameter d of the through-hole of the expanded bead is defined, as described above, based on the hole diameter of the through-hole 11 in the cut surface where the expanded bead 1 has a maximum cross-sectional area.

The average hole diameter d of the through-hole can be adjusted within the specified range by adjusting the size of the average hole diameter dr of the through-hole of a multilayer resin particle described later, the bulk density of the expanded bead, and the like. In addition, by using a second-step expanded bead produced by second expansion as the expanded bead, the average hole diameter d can be more easily adjusted to a smaller value.

[Average circularity Cp of through-hole]

In a cut surface obtained by cutting the expanded bead at a position where the expanded bead has a maximum cross-sectional area in a plane perpendicular to the axial direction, the average circularity Cp of the through-hole is preferably 0.90 or more, more preferably 0.92 or more, and still more preferably 0.95 or more. In this case, it is possible to more easily obtain the above effects of enhancing moldability of the expanded bead and shortening the cooling time during molding. Further, by increasing the average circularity Cp of the through-hole, the through-hole is less likely to be crushed by external force. Therefore, for example, even in a case where the expanded bead is compressed in the mold during in-mold molding, the through-hole is less likely to be closed, thereby further enhancing moldability during in-mold molding. In addition, by performing in-mold molding using the expanded bead, a molded article having excellent rigidity can be more easily obtained.

The average circularity Cp of the through-hole of the expanded bead is determined as follows. First, the expanded bead 1 is cut at a position where the expanded bead has a maximum cross-sectional area in a plane perpendicular to the axial direction, thereby exposing a cut surface as shown in FIG. 3. Next, a photograph of the cut surface of the expanded bead 1 is taken, and then the cross-sectional area $S_p$ of the through-hole 11 (namely, the opening area of the through-hole 11 in the cut surface) and the perimeter length $L_p$ of the through-hole 11 (namely, the length of the periphery of the through-hole 11 in the cut surface) are measured. The circularity of the through-hole 11 of each expanded bead 1 is calculated based on the following Formula (1). In the following Formula (1), $\pi$ represents pi.

$$\text{Circularity of through-hole} = 4\pi S_p / (L_p \times L_p) \dots (1)$$

The above operation is performed for 50 or more expanded beads 1 randomly selected, and the arithmetic average value of the circularities of the through-holes 11 of these expanded beads 1 is defined as the average circularity Cp of the through-hole. Even when the cross-sectional shape of the through-hole 11 of each expanded bead 1 is not uniform in the axial direction, the average circularity Cp of the through-hole is defined, as described above, based on the cross-sectional shape of the through-hole at the position where the cut surface of the expanded bead 1 has a maximum area.

The average circularity Cp of the through-hole can be adjusted within the above range by, for example, changing the shape of a die for forming the through-hole in a granulation step of a multilayer resin particle described later, or adjusting the water temperature during strand cooling which is usually carried out at a water temperature of about 25°C, to a lower water temperature (for example, 15°C or less). The upper limit of the average circularity Cp of the through-hole is 1. A preferred range of the average circularity Cp of the through-hole may be, for example, 0.90 or more and 1 or less, 0.92 or more and 1 or less, or 0.95 or more and 1 or less.

[Ratio d/D of average hole diameter d of through-hole to average outer diameter D of expanded bead]

The ratio d/D of the average hole diameter d of the through-hole to the average outer diameter D of the expanded bead is 0.4 or less. By setting the ratio d/D to 0.4 or less, secondary expandability of the expanded bead during in-mold molding can be moderately enhanced, thereby obtaining a molded article having excellent surface properties and rigidity in a wide molding pressure range from low to high pressure. From the viewpoint of obtaining such effects more certainly, the ratio d/D of the average hole diameter d of the through-hole to the average outer diameter D of the expanded bead is preferably 0.35 or less, more preferably 0.3 or less, and still more preferably 0.25 or less. In a case where the ratio d/D is too high, secondary expandability of the expanded bead during in-mold molding tends to deteriorate, leading to deterioration of surface properties and rigidity of the molded article.

The ratio d/D of the average hole diameter d of the through-hole to the average outer diameter D of the expanded bead is preferably 0.1 or more. In this case, the through-hole of the expanded bead is less likely to be crushed even when an external force is applied, thereby allowing the effects of the through-hole to be more reliably exhibited. A preferred range of the ratio d/D of the average hole diameter d of the through-hole to the average outer diameter D of the expanded bead may be, for example, 0.1 or more and 0.4 or less, 0.1 or more and 0.35 or less, 0.1 or more and 0.3 or less, or 0.1 or more and 0.25 or less.

From the viewpoint of increasing the wall thickness of the expanded bead, thereby enhancing secondary expandability of the expanded bead and rigidity of the molded article, and more reliably suppressing deformation and shrinkage of the molded article when the aging step is omitted, the average outer diameter D of the expanded bead is preferably 2 mm or more, more preferably 2.5 mm or more, and still more preferably 3 mm or more. On the other hand, from the viewpoint of further enhancing the filling property of the expanded bead in the mold, the average outer diameter D of the expanded bead is preferably 8 mm or less, more preferably 5 mm or less, and still more preferably 4.5 mm or less.

In order to configure a preferred range of the average outer diameter D of the expanded bead, the upper limit and the lower limit of the above average outer diameter D of the expanded bead can be arbitrarily combined. A preferred range of the average outer diameter D of the expanded bead may be, for example, 2 mm or more and 8 mm or less, 2.5 mm or more and 5 mm or less, or 3 mm or more and 4.5 mm or less.

The method for calculating the above average outer diameter D of the expanded bead is as follows. First, the expanded bead 1 is cut at a position where the expanded bead has a maximum cross-sectional area in a plane perpendicular to the axial direction, thereby exposing a cut surface of the expanded bead 1, as shown in FIG. 3. Then, the cross-sectional area of the expanded bead 1 including the through-hole 11 in the cut surface (namely, the area of a region surrounded by the outer peripheral edge of the expanded bead 1 in the cut surface) is calculated. The diameter of a virtual true circle having an area equal to the cross-sectional area of the expanded bead 1 is defined as the outer diameter of each expanded bead 1.

The outer diameters of 50 or more expanded beads 1 are thus calculated, and the arithmetic average value of the outer diameters of these expanded beads 1 is defined as the average outer diameter D of the expanded bead. Even when the cross-sectional area of each expanded bead 1 is not uniform in the axial direction, the average outer diameter D of the expanded bead is determined, as described above, based on the cross-sectional area of the expanded bead 1 in the cut surface where the expanded bead 1 has a maximum cross-sectional area.

[Average circularity Cb of outer peripheral edge of expanded bead]

In a cut surface obtained by cutting the expanded bead at a position where the expanded bead has a maximum cross-sectional area in a plane perpendicular to the axial direction, the average circularity Cb of the outer peripheral edge of the expanded bead is preferably 0.95 or more, more preferably 0.96 or more. By performing in-mold molding using such expanded beads, formation of streak patterns on a surface of the molded article can be more effectively suppressed, and a molded article having a favorable appearance can be more easily obtained.

The average circularity Cb of the outer peripheral edge of the expanded bead is determined as follows. First, the expanded bead is cut at a position where the expanded bead has a maximum cross-sectional area in a plane perpendicular to the axial direction, thereby exposing a cut surface as shown in FIG. 3. Next, a photograph of the cut surface of the expanded bead 1 is taken, and then the cross-sectional area $S_b$ of the expanded bead 1 including the through-hole 11 (namely, the area of a region surrounded by the outer peripheral edge of the expanded bead 1 in the cut surface) and the perimeter length $L_b$ of the outer peripheral edge of the expanded bead 1 (namely, the length of the outer peripheral edge of the expanded bead 1 in the cut surface) are measured. The circularity of the outer peripheral edge of each expanded bead 1 is calculated based on the following Formula (2). In the following Formula (2), $\pi$ represents pi.

$$\text{Circularity of outer peripheral edge of expanded bead} = 4\pi S_b/(L_b \times L_b) \ \dots \ (2)$$

The above operation is performed for 50 or more expanded beads 1 randomly selected, and the arithmetic average value of the circularities of these expanded beads 1 is defined as the average circularity Cb of the outer peripheral edge of the expanded bead. Even when the cross-sectional shape of each expanded bead 1 is not uniform in the axial direction, the average circularity Cb of the outer peripheral edge of the expanded bead is defined, as described above, based on the cross-sectional shape of the expanded bead 1 in the cut surface where the expanded bead 1 has a maximum cross-sectional area. The upper limit of the average circularity Cb of the outer peripheral edge is 1. A preferred range of the average circularity Cb of the outer peripheral edge of the expanded bead may be 0.95 or more and 1 or less, or 0.96 or more and 1 or less.

The ratio Cb/Cp of the average circularity Cb of the outer peripheral edge of the expanded bead to the average circularity Cp of the through-hole of the expanded bead is preferably 0.96 or more and 1.05 or less, and more preferably 0.98 or more and 1.02 or less. In this case, while the effect of improving moldability by the through-hole is more reliably exhibited, a molded article having excellent rigidity can be obtained, and formation of streak patterns on the surface of the molded article can be more effectively suppressed. From the same viewpoint, the absolute value |Cp - Cb| of the difference between the average circularity Cb of the outer peripheral edge of the expanded bead and the average circularity Cp of the through-hole is preferably 0.03 or less, more preferably 0.01 or less, and still more preferably 0.008 or less.

The average circularity Cb of the outer peripheral edge of the expanded bead can be adjusted within the specified range by, for example, forming the cover layer from a polyolefin-based resin having a melt mass flow rate $MFR_S$ within the specified range.

[Groove of expanded bead]

From the viewpoint of further increasing the average circularity of the outer peripheral edge of the expanded bead and more effectively suppressing the formation of streak patterns on a surface of the molded article, the ratio of the total cross-sectional area of grooves to the cross-sectional area of the expanded bead excluding the through-hole, in a cut surface obtained by cutting the expanded bead at a position where the expanded bead has a maximum cross-sectional area in a plane perpendicular to the axial direction, is preferably 3% or less, more preferably 1.5% or less, still more preferably 1.2% or less, further preferably 1% or less, particularly preferably 0.5% or less, and most preferably 0%, namely, the expanded bead has no groove on the side peripheral surface.

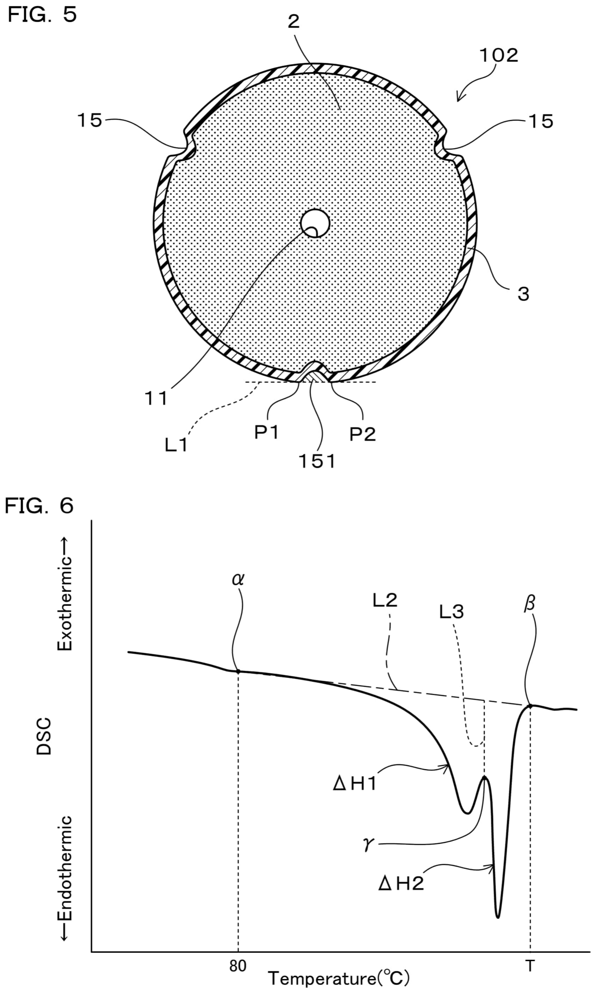

The above-mentioned "groove" refers to a depressed portion formed on a side peripheral surface of the expanded bead and extending along the axial direction of the expanded bead. For example, an expanded bead 102 shown in FIG. 4 has a cylindrical shape surrounded by a bottom surface 12, a top surface 13, and a side peripheral surface 14, and has a through-hole 11 penetrating through the inside thereof in the axial direction. The expanded bead 102 has three grooves 15 formed on the side peripheral surface 14 and located at substantially the same intervals in the circumferential direction of the expanded bead 102. When the expanded bead 102 is cut along a plane perpendicular to the axial direction, the grooves 15 of the expanded bead 102 are each observed as portions where the profile of the expanded bead 102 in the cut surface is recessed inward, as shown in FIG. 5.

The method for calculating the area ratio of the total cross-sectional area of the grooves of the expanded bead is as follows. First, the expanded bead 102 is cut at a position where the expanded bead has a maximum cross-sectional area in a plane perpendicular to the axial direction, thereby exposing a cut surface as shown in FIG. 5. Next, a photograph of the cut surface of the expanded bead 102 is taken, and then the cross-sectional area of the expanded bead 102 excluding the through-hole 11 (namely, the area of a region surrounded by the outer peripheral edge and inner peripheral edge of the expanded bead 102 in the cut surface) is measured.

Next, on the photograph of the cut surface of the expanded bead 102, a tangent line L1, which is in contact with two points P1 and P2 on the profile of the expanded bead 102 and does not pass through the inside of the expanded bead 102, is drawn outside each groove 15. The area of a region surrounded by the profile of the expanded bead 102 and the tangent line L1 is calculated, and this area is defined as the cross-sectional area of each groove 15. In other words, the cross-sectional area of each groove 15 is the area of a region 151 indicated by hatching in FIG. 5. The above operation is performed for all the grooves 15, and the sum of the cross-sectional areas of the grooves 15 of each expanded bead 102 is obtained by adding them together.

The sum of the cross-sectional areas of the grooves 15, thus obtained, is divided by the above-mentioned cross-sectional area of the expanded bead 102 excluding the through-hole 11, thereby calculating the ratio of the total cross-sectional area of the grooves 15 to the cross-sectional area of the expanded bead 102 in each expanded bead 102. The above operation is performed for 100 or more expanded beads 102, and the arithmetic average value of the ratios in these expanded beads 102 is defined as the area ratio of the total cross-sectional area of grooves of the expanded bead.

By forming the cover layer from a polyolefin-based resin having a melt mass flow rate $MFR_S$ within the specified range, it is possible to suppress formation of grooves on the side peripheral surface of the expanded bead and easily adjust the area ratio of the total cross-sectional area of grooves of the expanded bead within the above range. Although the reason is not entirely clear, it is considered that, for example, the residual stress in a resin particle obtained in a granulation step described later is relaxed, so that wrinkles are less likely to be formed on the expanded bead, and/or the cover layer tends to be formed more uniformly on the side peripheral surface of the resulting expanded bead.

[Average wall thickness t of expanded bead]

The average wall thickness t of the expanded bead is preferably 1.2 mm or more and 2 mm or less. In this case, secondary expandability of the expanded bead during in-mold molding can be further enhanced. An expanded bead having an average wall thickness t in the specified range is less likely to be crushed by external force, and therefore rigidity of a molded article obtained by in-mold molding of the expanded beads can be further enhanced. From the viewpoint of obtaining such effects more reliably, the average wall thickness t of the expanded bead is more preferably 1.3 mm or more and 2 mm or less, and still more preferably 1.5 mm or more and 2 mm or less.

The average wall thickness t of the expanded bead is the average value of the distance from the side peripheral surface of the expanded bead to the outer periphery of the through-hole (that is, the inner peripheral edge of the expanded bead). The average wall thickness t of the expanded bead is more specifically calculated based on the following Formula (3) using the average hole diameter d (unit: mm) of the through-hole and the average outer diameter D (unit: mm) of the expanded bead.

$$t = (D - d)/2 \qquad ... (3)$$

[Apparent density of expanded bead]

The apparent density of the expanded bead is preferably 10 kg/m$^3$ or more and 100 kg/m$^3$ or less, more preferably 20 kg/m$^3$ or more and 80 kg/m$^3$ or less, still more preferably 25 kg/m$^3$ or more and 60 kg/m$^3$ or less, and particularly preferably 30 kg/m$^3$ or more and 50 kg/m$^3$ or less. By performing in-mold molding with expanded beads having an apparent density within the above range, a lightweight molded article having excellent rigidity can be easily obtained. Conventionally, in the case of producing a molded article having a particularly low density, such a molded article was likely to deform significantly after release, and it was difficult to omit an aging step. In contrast, the expanded bead allows the aging step to be omitted even if the apparent density is low, and therefore a lightweight molded article having a desired shape can be produced even without aging.

The method for calculating the apparent density of the expanded bead is as follows. First, an expanded bead group is left to stand for one day under an environment at a relative humidity of 50%, a temperature of 23°C, and an atmospheric pressure of 1 atm, to condition the expanded beads. After measuring the mass (unit: g) of the expanded bead group, the expanded beads are immersed in alcohol (for example, ethanol) at 23°C contained in a measuring cylinder, with a wire mesh or the like, and the volume (unit: L) of the expanded bead group is determined from the increase in the liquid level. Thereafter, the apparent density (unit: $kg/m^3$) of the expanded beads can be obtained by unit conversion of the value obtained by dividing the mass of the expanded beads by the volume of the expanded beads.

[Foamed core layer]

The foamed core layer of the expanded bead is made of a polypropylene-based resin. Herein, the polypropylene-based resin refers to a homopolymer of a propylene monomer and a propylene-based copolymer containing 50 mass% or more of a constituent unit derived from propylene. The foamed core layer may contain one kind of the polypropylene-based resin, or two or more kinds of the polypropylene-based resins.

The foamed core layer is more preferably made of a propylene-based copolymer obtained by copolymerizing propylene with another monomer. Examples of the propylene-based copolymer preferably include copolymers of propylene and an $\alpha$-olefin having 4 to 10 carbon atoms, such as an ethylene-propylene copolymer, a butene-propylene copolymer, a hexene-propylene copolymer, and an ethylene-propylene-butene copolymer. Such a copolymer may be, for example, a random copolymer or a block copolymer or the like, and is preferably a random copolymer.

The melting point Tmc of the polypropylene-based resin constituting the foamed core layer is preferably 155°C or less. In this case, a molded article having excellent appearance and rigidity can be formed at a lower molding temperature (namely, low molding pressure). From the viewpoint of enhancing the above effect, the melting point Tmc of the polypropylene-based resin constituting the foamed core layer is preferably 152°C or less, more preferably 148°C or less. On the other hand, from the viewpoint of further enhancing heat resistance, mechanical strength, and the like of the molded article, the melting point Tmc of the polypropylene-based resin constituting the foamed core layer is preferably 135°C or more, more preferably 138°C or more, and still more preferably 140°C or more. From the above viewpoints, a preferred range of the melting point Tmc of the polypropylene-based resin constituting the foamed core layer may be, for example, 135°C or more and 155°C or less, 138°C or more and 152°C or less, or 140°C or more and 148°C or less.

The melting point Tmc of the polypropylene-based resin constituting the foamed core layer can be determined based on a DSC curve obtained by differential scanning calorimetry (namely, DSC) performed in accordance with JIS K7121-1987. Specifically, a test piece made of the polypropylene-based resin is prepared, and the test piece is conditioned according to "(2) The case of measurement of melting temperature after a definite heat treatment". In the conditioning, the heating rate and the cooling rate are each set to 10°C/min and the temperature range is from 30°C to 200°C. The test piece thus conditioned is heated from 30°C to 200°C at a heating rate of 10°C/min, to obtain a DSC curve. The vertex temperature of a melting peak appearing in the DSC curve is defined as the melting point Tmc of the polypropylene-based resin. When a plurality of melting peaks appear in the DSC curve, the vertex temperature of a melting peak having the largest area is defined as the melting point Tmc.

The melt mass flow rate $MFR_C$ of the polypropylene-based resin constituting the foamed core layer is preferably 5 g/10 min or more, more preferably 6 g/10 min or more, and still more preferably 7 g/10 min or more. In this case, the expandability and moldability can be further enhanced. On the other hand, from the viewpoint of further enhancing the rigidity of the molded article, the melt mass flow rate $MFR_C$ of the polypropylene-based resin constituting the foamed core layer is preferably 12 g/10 min or less, and more preferably 10 g/10 min or less.

In order to configure a preferred range of the melt mass flow rate $MFR_C$ of the polypropylene-based resin constituting the foamed core layer, the upper limit and the lower limit of the above melt mass flow rate $MFR_C$ can be arbitrarily combined. For example, a preferred range of the melt mass flow rate $MFR_C$ of the polypropylene-based resin constituting the foamed core layer may be 5 g/10 min or more and 12 g/10 min or less, 6 g/10 min or more and 12 g/10 min or less, or 7 g/10 min or more and 10 g/10 min or less. The MFRc of the polypropylene-based resin constituting the foamed core layer is a value measured under conditions of a test temperature of 230°C and a load of 2.16 kg in accordance with JIS K7210-1: 2014.

By covering the side peripheral surface of the foamed core layer with a cover layer made of a polyolefin-based resin having a high melt mass flow rate $MFR_S$, the expanded bead can suppress the formation of streak patterns on a surface of the molded article. In this case, while a polyolefin-based resin having a high melt mass flow rate $MFR_S$ is used as the resin constituting the cover layer, a polypropylene-based resin having a relatively low melt mass flow rate $MFR_C$, for example within the above range, can be used as the resin constituting the foamed core layer. As a result, the effect of suppressing the formation of streak patterns can be more easily obtained while maintaining the expandability and rigidity of the expanded bead.

The foamed core layer may contain a polymer other than the polypropylene-based resin as long as the operation and effect described above are not impaired. Examples of such a polymer include thermoplastic resins other than the polypropylene-based resin, such as polyethylene-based resins and polystyrene-based resins, and thermoplastic elastomers. The amount of the polymer other than the polypropylene-based resin contained in the foamed core layer is preferably 20 mass% or less, more preferably 10 mass% or less, still more preferably 5 mass% or less, and particularly preferably 0, namely, the foamed core layer substantially contains only the polypropylene-based resin as a polymer.

The foamed core layer may contain a cell adjusting agent, a crystal nucleating agent , a flame retardant, a flame retardant aid, a plasticizer, an antistatic agent, an antioxidant, an ultraviolet inhibitor, a light stabilizer, a conductive filler, or an antibacterial agent as long as the operation and effect described above are not impaired. The amount of the additive contained in the foamed core layer is, for example, preferably 0.01 parts by mass or more and 10 parts by mass or less with respect to 100 parts by mass of the polypropylene-based resin.

[Cover layer]

The side peripheral surface of the foamed core layer of the expanded bead is covered with a cover layer made of a polyolefin-based resin. The cover layer of the expanded bead may be in a foamed state or in a non-foamed state, and is preferably in a substantially non-foamed state. The above-mentioned "non-foamed state" includes a state in which the cover layer is not foamed and contains no cells, and a state in which cells have disappeared after foaming, and means that almost no cell structure is present in the cover layer.

The mass ratio of the foamed core layer and the cover layer of the expanded bead (foamed core layer : cover layer) is preferably 99.5:0.5 to 85:15, more preferably 99:1 to 88:12, and still more preferably 97:3 to 90:10. In this case, the effect of suppressing the formation of streak patterns can be more easily obtained while maintaining properties of the expanded bead, such as expandability and rigidity. Herein, "A to B" representing a numerical range has the same meaning as "A or more and B or less", and represents a numerical range including A and B as end points of the numerical range.

As the polyolefin-based resin constituting the cover layer, for example, a polyethylene-based resin, a polypropylene-based resin, or a polybutene-based resin can be used. From the viewpoint of adhesiveness to the foamed core layer, the polyolefin-based resin constituting the cover layer is preferably a polyethylene-based resin or a polypropylene-based resin, and more preferably a polypropylene-based resin. Examples of the polypropylene-based resin constituting the cover layer include an ethylene-propylene copolymer, a butene-propylene copolymer, an ethylene-propylene-butene copolymer, and a propylene homopolymer. Among these, the polypropylene-based resin constituting the cover layer is preferably an ethylene-propylene copolymer or an ethylene-propylene-butene copolymer. Examples of the polyethylene-based resin constituting the cover layer include linear low-density polyethylene (PE-LLD), low-density polyethylene (PE-LD), medium-density polyethylene (PE-MD), and high-density polyethylene (PE-HD).

The melt mass flow rate $MFR_S$ of the polyolefin-based resin constituting the cover layer is higher than 15 g/10 min. By setting the melt mass flow rate $MFR_S$ of the polyolefin-based resin constituting the cover layer of the expanded bead within the specified range, it is possible to suppress the formation of streak patterns on the surface of the molded article and thereby easily obtaining a molded article having a favorable appearance. While a polyolefin-based resin having a high melt mass flow rate $MFR_S$ is used for the cover layer, a polypropylene-based resin having a relatively low melt mass flow rate $MFR_C$ can be used as the polypropylene-based resin constituting the foamed core layer. As a result, sufficient rigidity and expandability can be imparted to the expanded bead.

It is considered that such an effect is obtained in the expanded bead as follows: by covering the side peripheral surface of the foamed core layer with the cover layer, the average circularity Cb of the outer peripheral edge of the expanded bead increases.

From the viewpoint of obtaining the above effect more reliably, the difference $MFR_S$ - $MFR_C$ between the melt mass flow rate $MFR_S$ of the polyolefin-based resin constituting the cover layer and the melt mass flow rate $MFR_C$ of the polypropylene-based resin constituting the foamed core layer is preferably 10 g/10 min or more, and preferably 12 g/10 min or more. From the same viewpoint, the ratio $MFR_S/MFR_C$ of the melt mass flow rate $MFR_S$ of the polyolefin-based resin constituting the cover layer to the melt mass flow rate $MFR_C$ of the polypropylene-based resin constituting the foamed core layer is preferably 2 or more, and more preferably 2.5 or more.

On the other hand, from the viewpoint of further suppressing separation between the cover layer and the foamed core layer while improving the appearance of the molded article, the difference $MFR_S$ - $MFR_C$ between the melt mass flow rate $MFR_S$ of the polyolefin-based resin constituting the cover layer and the melt mass flow rate $MFR_C$ of the polypropylene-based resin constituting the foamed core layer is preferably 30 g/10 min or less. From the same viewpoint, the ratio $MFR_S/MFR_C$ of the melt mass flow rate $MFR_S$ of the polyolefin-based resin constituting the cover layer to the melt mass flow rate $MFR_C$ of the polypropylene-based resin constituting the foamed core layer is preferably 5 or less, and more preferably 4 or less.

In order to configure a preferred range of the difference $MFR_S$ - $MFR_C$ between the melt mass flow rate $MFR_S$ of the polyolefin-based resin constituting the cover layer and the melt mass flow rate MFRc of the polypropylene-based resin constituting the foamed core layer, the upper limit and the lower limit of the above difference $MFR_S$ - MFRc can be arbitrarily combined. For example, a preferred range of the difference $MFR_S$ - MFRc may be 10 g/10 min or more and 30 g/10 min or less, or 12 g/10 min or more and 30 g/10 min or less. Similarly, in order to configure a preferred range of the ratio $MFR_S/MFR_C$ of the melt mass flow rate $MFR_S$ of the polyolefin-based resin constituting the cover layer to the melt mass flow rate MFRc of the polypropylene-based resin constituting the foamed core layer, the upper limit and the lower limit of the above ratio $MFR_S/MFR_C$ can be arbitrarily combined. For example, a preferred range of the ratio $MFR_S/MFR_C$ may be 2 or more and 5 or less, or 2.5 or more and 4 or less.

It is noted that the $MFR_S$ of the polyolefin-based resin constituting the cover layer is a value measured under conditions of a test temperature of 230°C and a load of 2.16 kg in accordance with JIS K7210-1:2014. Even when the cover layer is made of a polyethylene-based resin, the $MFR_S$ is measured under the conditions of a test temperature of 230°C and a load of 2.16 kg.

The melting point Tms of the polyolefin-based resin constituting the cover layer is preferably lower than the melting point Tmc of the polypropylene-based resin constituting the foamed core layer. By covering the foamed core layer with the cover layer made of such a polyolefin-based resin, the expanded beads can be fusion-bonded at a lower molding temperature (namely, at a low molding pressure) during in-mold molding. As a result, deformation and shrinkage of the molded article can be suppressed more reliably when the aging step is omitted. Moreover, in this case, the water-cooling time can be shortened to enhance the productivity. From the viewpoint of obtaining such operation and effect more reliably, the difference Tmc - Tms between the melting point Tmc of the polypropylene-based resin constituting the foamed core layer and the melting point Tms of the polyolefin-based resin constituting the cover layer is preferably more than 0°C and 40°C or less, more preferably 3°C or more and 35°C or less, and still more preferably 5°C or more and 30°C or less.

The method for measuring the melting point Tms of the polyolefin-based resin constituting the cover layer is the same as the above-mentioned method for measuring the melting point Tmc of the polypropylene-based resin constituting the foamed core layer except that the polyolefin-based resin is used instead of the polypropylene-based resin.

The cover layer may contain an additive such as a crystal nucleating agent, a flame retardant, a flame retardant aid, a plasticizer, an antistatic agent, an antioxidant, an ultraviolet inhibitor, a light stabilizer, a conductive filler, or an antibacterial agent as long as the operation and effect described above are not impaired. The amount of the additive contained in the cover layer is, for example, preferably 0.01 parts by mass or more and 10 parts by mass or less with respect to 100 parts by mass of the polyolefin-based resin.

[Coloring pigment]

The foamed core layer and the cover layer each contain a coloring pigment. The coloring pigment may have any color other than white. For example, pigments of various color tones, such as a black pigment, a red pigment, a blue pigment, a yellow pigment, and a green pigment can be used. The coloring pigment may be an inorganic pigment or an organic pigment.

Examples of the inorganic pigments include carbon particles such as carbon black; chromates such as chrome yellow, zinc yellow, and barium chromate; ferrocyanide compounds such as iron blue; sulfides such as cadmium yellow and cadmium red; oxides such as red iron oxide; and silicates such as ultramarine. Examples of the organic pigments include azo pigments such as monoazo pigments, disazo pigments, azo lakes, condensed azo pigments, and chelate azo pigments; and polycyclic pigments such as phthalocyanine-based, anthraquinone-based, perylene-based, perinone-based, thioindigo-based, quinacridone-based, dioxazine-based, isoindolinone-based, and quinophthalone-based pigments.

The foamed core layer may contain one kind of coloring pigment, or two or more kinds of coloring pigments. Similarly, the cover layer may contain one kind of the coloring pigment, or two or more kinds of the coloring pigments. The color tone of the coloring pigment contained in the foamed core layer and the color tone of the coloring pigment contained in the cover layer may be the same or different from each other. From the viewpoint of imparting a luxurious appearance to the molded article, the coloring pigments contained in the foamed core layer and the cover layer is preferably a black pigment. As the black pigment, it is preferable to use a carbon particle, more specifically carbon black.

The amount of the coloring pigment contained in the foamed core layer is preferably 0.1 mass% or more and 5 mass% or less, and the amount of the coloring pigment contained in the cover layer is preferably 0.1 mass% or more and 5 mass% or less. In this case, a desired color tone can be imparted to the expanded bead while sufficiently ensuring the secondary expandability and fusion bondability of the expanded bead during in-mold molding. Thus, a molded article having a desired color tone and a favorable appearance can be more easily obtained. From these viewpoints, the amount of the coloring pigment contained in the foamed core layer is more preferably 0.3 mass% or more and 4.5 mass% or less, and the amount of the coloring pigment contained in the cover layer is more preferably 0.3 mass% or more and 4.5 mass% or less. Furthermore, it is still more preferable that the amount of the coloring pigment contained in the foamed core layer is 0.5 mass% or more and 4 mass% or less, and that the amount of the coloring pigment contained in the cover layer is 0.5 mass% or more and 4 mass% or less.

The reason why streak patterns are formed on the surface of the molded article is considered as follows. For example, such streak patterns may be generated when the grooves formed on the side peripheral surfaces of the expanded beads are exposed on the surface of the molded article. The streak patterns on the surface of the molded article are particularly conspicuous in a molded article obtained by molding an expanded bead containing a coloring pigment. This is considered to be because the streak patterns often appear lighter in color than the surrounding area and are therefore less noticeable in a white molded article containing no coloring pigment, and/or because, in conventional expanded beads containing a coloring pigment, the average circularity of the outer peripheral edge of such expanded beads tends to be low. According to the expanded beads, deterioration in appearance due to the streak patterns can be suppressed even in a colored molded article obtained from the expanded bead containing the coloring pigment.

[Closed cell content]

The closed cell content of the expanded bead is preferably 90% or higher, more preferably 92% or higher, and still more preferably 95% or higher, from the viewpoint of enhancing moldability of the expanded bead and further enhancing rigidity of the molded article.

The closed cell content of the expanded bead can be measured using an air comparison pycnometer in accordance with ASTM-D2856-70, Procedure C. Specifically, the measurement is performed as follows. First, the expanded beads are left to stand for 24 hours or more under an environment at a relative humidity of 50%, a temperature of 23°C, and an atmospheric pressure of 1 atm, to condition the expanded beads. A measurement sample is collected from the conditioned expanded beads so that the reading of a calibration mark on a measuring cylinder becomes about 20 cm$^3$ when the expanded beads are naturally deposited therein. The measurement sample is immersed in ethanol at a temperature of 23°C contained in a measuring cylinder, and the apparent volume of the measurement sample is determined based on the increase in the liquid level.

After the measurement sample used for measuring the apparent volume is sufficiently dried, the value of true volume of the measurement sample is measured with AccuPyc II 1340 manufactured by Shimadzu Corporation in accordance with Procedure C described in ASTM-D2856-70. Using these volume values, the closed cell content (unit: %) of the measurement sample is calculated based on the following Formula (4).

$$\text{Closed cell content} = (Vx - W/\rho) \times 100/(Va - W/\rho) \ ... \ (4)$$

In Formula (4), Vx (unit: cm$^3$) represents the true volume (namely, the sum of the volume of the resin constituting the expanded bead and the total cell volume of the closed cell portions of the expanded bead) in the expanded bead, Va (unit: cm$^3$) represents the apparent volume (namely, the volume measured from the increase in the liquid level when the expanded beads are immersed in ethanol contained in a measuring cylinder) of the expanded bead, W (unit: g) represents the mass of the measurement sample, and $\rho$ (unit: g/cm$^3$) represents the density of the polypropylene-based resin constituting the foamed core layer.

The above operation is performed five times using different measurement samples, and the arithmetic average value of the closed cell contents obtained from these five measurements is defined as the closed cell content of the expanded bead.

[High-temperature peak]

The expanded bead preferably has a crystal structure in which an endothermic peak due to melting inherent to the polypropylene-based resin constituting the foamed core layer and one or more melting peaks located on the higher temperature side than the endothermic peak appear in a DSC curve obtained when the expanded bead is heated from 23°C to 200°C at a heating rate of 10°C/min. An expanded bead having such a crystal structure has excellent mechanical strength and excellent moldability. Hereinafter, the endothermic peak due to melting inherent to the polypropylene-based resin, appearing in the DSC curve, is referred to as "resin intrinsic peak", and the melting peak appearing on the higher temperature side than the resin intrinsic peak is referred to as "high-temperature peak". The resin intrinsic peak is generated by endotherm when the crystals originally possessed by the polypropylene-based resin constituting the foamed core layer are melted. On the other hand, the high-temperature peak is presumed to be generated due to melting of secondary crystals formed in the polypropylene-based resin constituting the foamed core layer during the production process of the expanded bead. In other words, in a case where the high-temperature peak appears in the DSC curve, it is presumed that secondary crystals are formed in the polypropylene-based resin.

Whether or not the expanded bead has the above-mentioned crystal structure can be determined based on a DSC curve obtained by performing differential scanning calorimetry (DSC) under the above-mentioned conditions in accordance with JIS K7121: 1987. In performing DSC, 1 to 3 mg of the expanded bead may be used as a sample.

Specifically, in a DSC curve obtained by performing heating (namely, first heating) from 23°C to 200°C at a heating rate of 10°C/min as described above, both a high-temperature peak and a resin intrinsic peak of the polypropylene-based resin constituting the foamed core layer appear. In contrast, in a DSC curve obtained by performing the first heating, then cooling from 200°C to 23°C at a cooling rate of 10°C/min, and then heating again (namely, second heating) from 23°C to 200°C at a heating rate of 10°C/min, only a resin intrinsic peak of the polypropylene-based resin constituting the foamed core layer appears. Accordingly, the resin intrinsic peak and the high-temperature peak can be distinguished by comparing the DSC curve obtained in the first heating with the DSC curve obtained in the second heating. The vertex temperature of the resin intrinsic peak may slightly differ between the first heating and the second heating, but the difference is usually within 5°C.

From the viewpoints of further enhancing the moldability of the expanded bead and obtaining a molded article having higher rigidity, the heat of fusion of the high-temperature peak of the expanded bead is preferably 5 J/g or more and 40 J/g or less, more preferably 7 J/g or more and 30 J/g or less, and still more preferably 10 J/g or more and 20 J/g or less.

The above-mentioned heat of fusion of the high-temperature peak is a value determined as follows. First, the expanded beads are left to stand under conditions of a relative humidity of 50%, 23°C, and 1 atm for 24 hours, to condition the expanded beads. Then, differential scanning calorimetry is performed using 1 to 3 mg of the conditioned expanded beads as a sample under conditions of heating from 23°C to 200°C at a heating rate of 10°C/min, thereby obtaining a DSC curve. FIG. 6 shows an example of the DSC curve. In a case where the expanded beads have a high-temperature peak, a resin intrinsic peak $\Delta H1$, and a high-temperature peak $\Delta H2$ having a vertex on the higher temperature side than the vertex of the resin intrinsic peak $\Delta H1$ appear in the DSC curve, as shown in FIG. 6.

Next, a straight line L2 is drawn on the DSC curve connecting a point $\alpha$ corresponding to 80°C and a point $\beta$ corresponding to the melting end temperature T of the expanded bead. The melting end temperature T is the end point on the higher temperature side of the high-temperature peak $\Delta H2$, namely, the intersection of the high-temperature peak $\Delta H2$ and the baseline on the higher temperature side of the high-temperature peak $\Delta H2$ in the DSC curve.

After the straight line L2 is drawn, a straight line L3 is drawn so as to pass through a local maximum point $\gamma$ present between the resin intrinsic peak $\Delta H1$ and the high-temperature peak $\Delta H2$, and parallel to the vertical axis of the graph. The resin intrinsic peak $\Delta H1$ and the high-temperature peak $\Delta H2$ are divided by the straight line L3. The endothermic amount of the high-temperature peak $\Delta H2$ can be calculated based on the area surrounded by the portion constituting the high-temperature peak $\Delta H2$ in the DSC curve, the straight line L2 and the straight line L3.

(Method for producing expanded bead)

The method for producing the expanded beads includes a granulation step of preparing multilayer resin particles each having a core layer made of a polypropylene-based resin and having a tubular shape with a through-hole, and a cover layer made of a polyolefin-based resin and covering a side peripheral surface of the core layer, and a foaming step of foaming (expanding) the multilayer resin particles. Hereinafter, each step will be described in more detail.

[Granulation step]

The method for preparing the multilayer resin particles in the granulation step is not particularly limited. The multilayer resin particles can be produced by, for example, a strand cutting method. In the strand cutting method, a co-extrusion apparatus equipped with an extruder for forming the core layer, an extruder for forming the cover layer, and a co-extrusion die connected to these two extruders is used to obtain the multilayer resin particles. Specifically, first, the polypropylene-based resin to form the foamed core layer of the expanded beads, a coloring pigment, an additive added as necessary, and the like are supplied into the extruder for forming the core layer, and are melt-kneaded in the extruder for forming the core layer to prepare a resin melt-kneaded product for forming the core layer. The polyolefin-based resin to form the cover layer of the expanded beads, a coloring pigment, an additive added as necessary, and the like are supplied into the extruder for forming the cover layer, and are melt-kneaded in the extruder for forming the cover layer to prepare a resin melt-kneaded product for forming the cover layer.

Thereafter, the respective melt-kneaded products are discharged from the extruders and joined together in the co-extrusion die, thereby forming a composite with a multilayer structure including a core layer in a non-foamed state and a cover layer in a non-foamed state covering the side peripheral surface of the core layer. The composite is then extruded through a small hole of a die provided with a mechanism capable of forming a through-hole in the core layer, thereby forming a strand-shaped extrudate having a through-hole in the core layer. This extrudate is cooled while being taken up and then cut to a desired length, thereby obtaining multilayer resin particles each having a through-hole in the core layer. The method for producing the multilayer resin particles is not limited to the above-mentioned method, and a hot-cutting method, an underwater-cutting method, or the like may be employed.

In preparing the multilayer resin particles, a strand cutting method is preferably employed in which a strand-shaped extrudate is cooled in water and then cut. In this case, the dimensional accuracy of the multilayer resin particles can be further enhanced and the shapes of the through-holes in the finally obtained expanded beads can be more easily formed into desired shapes.

When employing a strand cutting method, namely, a method in which the strand-shaped extrudate extruded from the die is taken up and simultaneously cooled in water and then cut to an appropriate length, for cutting of the extrudate, the particle size, the length/outer diameter ratio, and the mass per one particle of the multilayer resin particles can be adjusted by appropriately changing the extrusion rate, the take-up rate, the cutter speed, and the like during extrusion of the resin melt-kneaded products.

The average outer diameter Dr of the multilayer resin particle is preferably 0.1 mm or more and 3.0 mm or less, and more preferably 0.3 mm or more and 1.5 mm or less.

The mass per multilayer resin particle is preferably 0.1 mg or more and 20 mg or less, more preferably 0.2 mg or more and 10 mg or less, still more preferably 0.3 mg or more and 5 mg or less, and particularly preferably 0.4 mg or more and 2 mg or less. The mass per the multilayer resin particle is a value obtained by dividing the mass of 200 multilayer resin particles randomly selected by the number of the multilayer resin particles. The mass per the multilayer resin particle, obtained by the above-mentioned method, is sometimes referred to as "average mass of the multilayer resin particle".

In the production method, by setting the average hole diameter dr of the through-hole of the core layer in the multilayer resin particle to less than 0.25 mm, and the ratio dr/Dr of the average hole diameter dr of the through-hole to the average outer diameter Dr of the multilayer resin particle to 0.4 or less, the expanded beads having the specified shape can be easily obtained. The average hole diameter dr of the through-hole and the ratio dr/Dr in the core layer of the multilayer resin particle can be adjusted by, for example, the hole diameter of the small hole of a die for forming the through-hole (namely, the inner diameter of the die).

The methods for calculating the average outer diameter Dr of the multilayer resin particle and the average hole diameter dr of the through-hole are the same as the above-mentioned methods for calculating the average outer diameter D of the expanded bead and the average hole diameter d of the through-hole, except that the multilayer resin particle is used instead of the expanded bead.

[Foaming (Expanding) step]

In the foaming (expanding) step, the multilayer resin particles are foamed (expanded). The method for foaming the multilayer resin particles is not particularly limited, but it is preferable to employ, for example, a method called "direct foaming (expanding) method" in which multilayer resin particles containing a blowing agent and dispersed in an aqueous medium in a container are released together with the dispersion medium into an atmosphere at a lower pressure than the pressure in the container.

In foaming the multilayer resin particles by the direct foaming method, first, the multilayer resin particles are charged into a container such as a pressure container, and dispersed into a dispersion medium. If necessary, a dispersant, a dispersion aid, a surfactant, or the like for dispersing the multilayer resin particles in the dispersion medium in the container may be added.

As the dispersion medium, an aqueous dispersion medium mainly composed of water can be used. The aqueous dispersion medium may further contain, in addition to water, a hydrophilic organic solvent such as ethylene glycol, glycerin, methanol, or ethanol. The proportion of water in the aqueous dispersion medium is preferably 60 mass% or more, more preferably 70 mass% or more, and still more preferably 80 mass% or more.

It is preferable to add a dispersant to the dispersion medium. By adding a dispersant to the dispersion medium, the fusion-bonding between the multilayer resin particles heated in the container during the foaming step can be suppressed. The amount of the dispersant added is preferably 0.001 parts by mass or more and 5 parts by mass or less per 100 parts by mass of the multilayer resin particles. As the dispersant, an organic dispersant or an inorganic dispersant can be used. From the viewpoint of handleability, a finely particulate inorganic substance is preferably used as the dispersant. More specifically, examples of the dispersants include a clay mineral such as amsnite, kaolin, mica and clay, aluminum oxide, titanium oxide, basic magnesium carbonate, basic zinc carbonate, calcium carbonate, or iron oxide. These dispersants may be used singly, or two or more of the dispersants may be used in combination. In particular, a clay mineral is preferably used as the dispersant. The clay mineral may be a natural or synthetic clay mineral.

When a dispersant is used, it is preferable to use an anionic surfactant such as sodium dodecylbenzenesulfonate, sodium alkylbenzenesulfonate, sodium lauryl sulfate, or sodium oleate as the dispersion aid in combination. The amount of the dispersion aid added is preferably 0.001 parts by mass or more and 1 part by mass or less per 100 parts by mass of the multilayer resin particles.

After the multilayer resin particles are dispersed in the dispersion medium, the multilayer resin particles are impregnated with a blowing agent in a container. The blowing agent to be impregnated into the multilayer resin particles is preferably a physical blowing agent. Examples of the physical blowing agent include inorganic physical blowing agents such as carbon dioxide, air, nitrogen, helium, and argon, and organic physical blowing agents such as aliphatic hydrocarbons including propane, butane, and hexane, alicyclic hydrocarbons including cyclopentane and cyclohexane, and halogenated hydrocarbons including 1,3,3,3-tetrafluoropropene, 1-chloro-3,3,3-trifluoropropene, 1-chloro-2,3,3,3-tetrafluoropropene, chlorofluoromethane, trifluoromethane, 1,1-difluoromethane, 1-chloro-1,1-dichloroethane, 1,2,2,2-tetrafluoroethane, methyl chloride, ethyl chloride, and methylene chloride. The physical blowing agents may be used singly, or two or more of the physical blowing agents may be used in combination. The inorganic physical blowing agent and the organic physical blowing agent can also be mixed and then used. From the viewpoint of environmental load and handleability, it is preferable to use the inorganic physical blowing agent, more preferably carbon dioxide as the physical blowing agent.

The amount of the blowing agent added is preferably 0.1 parts by mass or more and 30 parts by mass or less, more preferably 0.5 parts by mass or more and 15 parts by mass or less with respect to 100 parts by mass of the multilayer resin particles.

As a method for impregnating the multilayer resin particles with the blowing agent, for example, a method in which the blowing agent is supplied into a container and impregnated into the multilayer resin particles in the dispersion medium can be employed. By heating the multilayer resin particles together with the dispersion medium, impregnation of the multilayer resin particles with the blowing agent can be further promoted.

The pressure in the container during foaming is preferably 0.5 MPa(G) or more in terms of the gauge pressure. On the other hand, the pressure in the container is preferably 4.0 MPa(G) or less in terms of the gauge pressure. When the pressure falls within the above range, the expanded beads can be safely produced without any risk of breakage, rupture, or the like of the container.

When the dispersion medium is heated, the temperature of the dispersion medium can be raised at a rate of 1 to 5°C/min, thereby allowing the temperature during foaming to be in an appropriate range.

After impregnation of the multilayer resin particles with the blowing agent is completed, the contents in the container are released into an environment at a lower pressure than the pressure in the container. As a result, the core layers of the multilayer resin particles are foamed to form a cell structure, which is then cooled and stabilized by outside air, thereby obtaining the expanded beads.

When the multilayer resin particle is impregnated with the blowing agent, heating and foaming are preferably performed as follows. A first holding step for holding at a temperature of (melting point of polypropylene-based resin - 20°C) or higher and lower than (melting end temperature of polypropylene-based resin) for a sufficient time, preferably about 10 to 60 minutes is performed, and then the temperature is adjusted to a temperature of (melting point of polypropylene-based resin - 15°C) or higher and lower than (melting end temperature of polypropylene-based resin + 10°C). If necessary, a second holding step for holding at this temperature for a sufficient time, preferably about 10 to 60 minutes is performed. Thereafter, it is preferable that the contents in the container are released to the outside to foam the multilayer resin particle while the temperature in the container is maintained to (melting point of polypropylene-based resin - 10°C) or higher. The temperature in the container during foaming is more preferably (melting point of polypropylene-based resin) or higher and (melting point of polypropylene-based resin + 20°C) or lower. By heating and foaming the multilayer resin particles in this manner, secondary crystals can be formed in the polypropylene-based resin constituting the foamed core layer, thereby easily obtaining expanded beads having excellent mechanical strength and excellent moldability.

In the foaming (expanding) step, the multilayer resin particles may be foamed in a single step by the above-mentioned direct foaming method, or the expanded beads obtained by the direct foaming method may be further expanded. When the multilayer resin particles are expanded in two steps, an expanding step in the first stage is referred to as "first expanding step" and the expanded beads obtained in the first expanding step are referred to as "first-step expanded beads". An expanding step in the second stage is referred to as "second expanding step". The expanded beads obtained in the second expanding step are also sometimes referred to "second-step expanded beads".

When the multilayer resin particles are expanded in two steps, a specific method is, for example, as follows. First, in the first expanding step, for example, the multilayer resin particles are foamed by the above-mentioned direct foaming method to obtain first-step expanded beads. Thereafter, an internal pressure is applied to the first-step expanded beads. More specifically, the first-step expanded beads are placed in a pressure-resistant container, and then the inside of the pressure-resistant container is pressurized with an inorganic gas such as air or carbon dioxide to impregnate the first-step expanded beads with the inorganic gas. As a result, the pressure in cells of the first-step expanded beads becomes equal to the atmospheric pressure or more. Thereafter, the first-step expanded beads taken out from the pressure-resistant container are heated with a heating medium such as steam or heating air under an environment having a pressure lower than the pressure inside the cells, thereby secondarily expanding the first-step expanded beads.

(Expanded beads molded article)

By in-mold molding the expanded beads, an expanded beads molded article can be obtained. The molded article has an open cell structure. The open cell structure is a minute space portions communicated with the outside of the molded article. The open cell structure is formed by a complex connection of voids, including voids formed by mutual communication of through-holes of the expanded beads, voids formed by communication of the through-holes of the expanded beads with gaps between the expanded beads, voids formed by communication of gaps between the expanded beads, and an open cell portion of the expanded beads constituting the molded article.

The molded article can be used as an acoustic material, a shock-absorbing material, a cushioning material, or the like, in various fields, for example, in the field of vehicles such as automobiles, and the field of construction.

In producing the expanded beads molded article, in-mold molding may be performed by, for example, filling the expanded beads into a mold and then supplying steam as a heating medium into the mold. Specifically, first, the expanded beads are filled into a mold having a cavity corresponding to the shape of a desired molded article. After the filling of the expanded beads is completed, steam is supplied into the mold to heat the expanded beads. The expanded beads in the mold are heated with steam, thereby being secondarily expanded and mutually fusion-bonded. As a result, the expanded beads in the mold can be integrated to form a molded article.

After the heating of the expanded beads is completed, the molded article in the mold is cooled to stabilize the shape. Thereafter, the molded article is taken out from the mold, thereby completing the in-mold molding. In the production method, if necessary, an aging step may be performed in which the molded article after demolding is left to stand for a predetermined time under a high-temperature atmosphere adjusted to a temperature of, for example, about 60°C to 80°C. Even when the molded article after demolding is not subjected to the aging step under a high-temperature atmosphere, shrinkage and deformation of the molded article can be suppressed. When the aging step is omitted, for example, the molded article after demolding may be left to stand, for example, in an environment at 23°C for 12 hours, thereby stabilizing the shape of the molded article.

Examples

Examples of the expanded bead, the expanded beads molded article, and the methods for producing the bead and the article are described below.

(Resin)

Table 1 shows properties and the like of the resins used for producing the expanded beads.

[Table 1]

(Table 1)

| Resin Symbol | Type | Density (kg/m$^3$) | Melting point (°C) | MFR (g/10 min) |
|---|---|---|---|---|
| PP1 | Ethylene-propylene random copolymer | 900 | 142 | 8 |
| PP2 | Ethylene-propylene random copolymer | 900 | 153 | 7 |
| PP3 | Ethylene-propylene random copolymer | 900 | 133 | 22 |
| PP4 | Ethylene-propylene random copolymer | 900 | 136 | 10 |
| PP5 | Ethylene-propylene-butene random copolymer | 900 | 134 | 6 |
| PE1 | Linear low-density polyethylene | 919 | 120 | 34 |
| PE2 | Linear low-density polyethylene | 938 | 127 | 7 |

[Melting point]

The melting point of each resin was determined in accordance with JIS K7121: 1987. Specifically, first, a test piece made of the resin was conditioned based on "(2) The case of measurement of melting temperature after a definite heat treatment" described in JIS K7121: 1987. In the conditioning, the heating rate and the cooling rate were each set at 10°C/min and the temperature range was from 30°C to 200°C. The test piece after conditioning was heated from 30°C to 200°C at a heating rate of 10°C/min to obtain a DSC curve. The vertex temperature of a melting peak appearing in the DSC curve was defined as the melting point. As the measurement apparatus, a heat-flux differential scanning calorimeter (Model number: DSC7020 manufactured by SII NanoTechnology Inc.) was used.

[Melt mass flow rate of resin]

The melt mass flow rate of the polypropylene-based resin and the polyethylene-based resin was measured under the conditions of a temperature of 230°C and a load of 2.16 kg in accordance with JIS K7210-1: 2014. In Table 2 to Table 4 described below, the melt mass flow rate of the resin constituting the cover layer is denoted as $MFR_S$, and the melt mass flow rate of the resin constituting the foamed core layer is denoted as $MFR_C$.

Next, the configuration and the production method of each expanded bead used in the present Examples are described.

(Example 1)

Expanded bead 1 of Example 1 has a cylindrical shape with a through-hole 11 penetrating the inside thereof in the axial direction, as shown in FIGS. 1 to 3. Expanded bead 1 of Example 1 has a multilayer structure including a foamed core layer 2 made of PP1, and a cover layer 3 made of PP3 which covers the foamed core layer 2 and is in a non-foamed state.

The method for producing the expanded beads of this Example is as follows.

[Granulation step]

In the granulation step of this Example, multilayer resin particles were produced by a strand cutting method. Specifically, first, a co-extrusion apparatus equipped with an extruder for forming the core layer, an extruder for forming the cover layer, and a co-extrusion die connected to these two extruders was used, and the extrudate extruded from the co-extrusion apparatus was cut to an appropriate length to obtain the multilayer resin particles. In the extruder for forming the core layer, PP1, carbon black as a coloring pigment, and zinc borate as a cell adjusting agent were melt-kneaded to obtain a resin melt-kneaded product for forming the core layer. The blending amount of the zinc borate was 500 ppm by mass with respect to the mass of PP1, and the blending amount of the carbon black to the melted resin product for forming the core layer was 2.7 mass% in the melted resin product for forming the core layer. In parallel, in the extruder for forming the cover layer, PP3 and the carbon black as a coloring pigment were melt-kneaded to obtain a resin melt-kneaded product for forming the cover layer. The blending amount of the carbon black to the resin melt-kneaded product for forming the cover layer was 2.7 mass% in the resin melt-kneaded product for forming the cover layer.

These resin melt-kneaded products were joined in the co-extrusion die to form a composite including a core layer in a non-foamed state and a cover layer in a non-foamed state covering a side peripheral surface of the core layer. The composite was extruded through a small hole of the co-extrusion die, and the extrudate was cooled in water at a water temperature adjusted to 10°C while being taken up, and then cut to an appropriate length with a pelletizer, thereby obtaining multilayer resin particles including a core layer and a cover layer covering the side peripheral surface of the core layer, with a through-hole formed in the core layer. The mass ratio of the core layer and the cover layer in the multilayer resin particle, core layer : cover layer, was 95:5 (namely, the mass ratio of the cover layer was 5%). The mass per multilayer resin particle was about 1.5 mg.

[Foaming (Expanding) step]

In the foaming (expanding) step of this Example, the multilayer resin particles were expanded in two steps to produce the expanded beads. In the first expanding step, the multilayer resin particles were foamed by the direct foaming method to produce first-step expanded beads. Specifically, first, 1 kg of the multilayer resin particles was charged into a 5 L container together with 3 L of water as a dispersion medium. Next, 0.3 parts by mass of a dispersant and 0.004 parts by mass of a dispersion aid were added into the container with respect to 100 parts by mass of the multilayer resin particles to disperse the multilayer resin particles in the dispersion medium. Kaolin was used as the dispersant. A surfactant (specifically, sodium alkylbenzenesulfonate) was used as the dispersion aid.

Thereafter, the container was sealed, and carbon dioxide as a blowing agent was added into the container. While stirring the inside of the container, heating was performed to a temperature described in the column "Foaming temperature" in Table 2. The pressure in the container (also referred to as impregnation pressure or carbon dioxide pressure) was as shown in the column "Pressure in container" in Table 2. After maintaining the foaming temperature for 15 minutes, the container was opened, and the contents were released to the atmosphere, thereby producing first-step expanded beads including a foamed core layer obtained by expanding the core layer and a cover layer in a non-foamed state covering the foamed core layer.

Next, a second expanding step was performed to further expand the first-step expanded beads, thereby obtaining the expanded beads. Specifically, the first-step expanded beads were placed in a pressure-resistant container (specifically, a metallic drum), and air was supplied into the pressure-resistant container to increase the pressure in the container and impregnate cells with air. The internal pressure of the cells in the first-step expanded beads taken out from the pressure-resistant container was as shown in Table 2. Thereafter, the first-step expanded beads were placed in the metallic drum, and steam was supplied so that the drum pressure reached the value shown in Table 2, thereby heating the first-step expanded beads and obtaining expanded beads having the apparent density shown in Table 2.

(Example 2)

The expanded beads of this Example have substantially the same configuration as in the expanded beads of Example 1, except that the apparent density was different. The method for producing the expanded beads of this Example is the same as the method for producing the expanded beads of Example 1, except that the drum pressure in the second expanding step was changed as shown in Table 2.

(Example 3)

The expanded beads of this Example have substantially the same configuration as in the expanded beads of Example 1, except that the resin constituting the foamed core layer was changed from PP1 to PP2. The method for producing the expanded beads of this Example is substantially the same as the method for producing the expanded beads of Example 1, except that the resin supplied to the extruder for forming the core layer in the granulation step was changed from PP1 to PP2, and the conditions in the foaming step were changed as shown in Table 2.

(Example 4)

The expanded beads of this Example have substantially the same configuration as in the expanded beads of Example 1, except that the resin constituting the cover layer was changed from PP3 to PE1. The method for producing the expanded beads of this Example is substantially the same as the method for producing the expanded beads of Example 1, except that the resin supplied to the extruder for forming the cover layer in the granulation step was changed from PP3 to PE1.

(Example 5)

The expanded beads of this Example have substantially the same configuration as in the expanded beads of Example 1, except that the blending amounts of carbon black in the resin melt-kneaded product for forming the core layer and the resin melt-kneaded product for forming the cover layer were each set to 1.0 mass%. The method for producing the expanded beads of this Example is substantially the same as the method for producing the expanded beads of Example 1, except that, in the granulation step, the amount of the carbon black supplied to the extruder for forming the core layer and the extruder for forming the cover layer was changed to 1.0 mass% in each melt-kneaded products.

(Example 6)

The expanded beads of this Example have substantially the same configuration as in the expanded beads of Example 1, except that the blending amounts of carbon black to the resin melt-kneaded product for forming the core layer and the resin melt-kneaded product for forming the cover layer were each set to 4.0 mass% in each of the kneaded products. The method for producing the expanded beads of this Example is substantially the same as the method for producing the expanded beads of Example 1, except that the amount of the carbon black supplied to the extruder for forming the core layer and the extruder for forming the cover layer was changed to 4.0 mass% in each of the melt-kneaded products in the granulation step.

(Comparative Example 1)

The expanded beads of this Comparative Example have a single-layer structure including only a foamed core layer having a through-hole. The method for producing the expanded beads of this Comparative Example is substantially the same as the method for producing the expanded beads of Example 1, except that no cover layer was formed on the side peripheral surface of the core layer in the granulation step.

(Comparative Examples 2 to 4)

The expanded beads of Comparative Examples 2 to 4 have substantially the same configuration as in expanded beads 1 of Example 1, except that the resin constituting the cover layer was changed from PP3 to the resin shown in Table 3. The methods for producing the expanded beads of these Comparative Examples are substantially the same as the method for producing the expanded beads of Example 1, except that, in the granulation step, the resin supplied to the extruder for forming the cover layer was changed from PP3 to the resin shown in Table 3.

(Reference Example 1)

The expanded beads of this Reference Example have substantially the same configuration as in the expanded beads of Comparative Example 3, except that the average hole diameter d of the through-hole was changed to the value shown in Table 4. The method for producing the expanded beads of this Reference Example is substantially the same as the method for producing the expanded beads of Comparative Example 3, except that the die used in the granulation step was replaced with a die having a shape capable of forming a core layer having a larger through-hole diameter.

(Reference Example 2)

The expanded beads of this Reference Example have substantially the same configuration as in the expanded beads of Comparative Example 3, except that no through-hole is formed. The method for producing the expanded beads of this Reference Example is substantially the same as the method for producing the expanded beads of Comparative Example 3, except that the co-extrusion die was replaced with a die having a shape that prevents formation of a through-hole.

(Reference Example 3)

The expanded beads of this Reference Example have substantially the same configuration as in the expanded beads of Comparative Example 3, except that no coloring pigment is contained. The method for producing the expanded beads of this Reference Example is substantially the same as the method for producing the expanded beads of Comparative Example 3, except that no coloring pigment was added in the granulation step.
Tables 2 to 4 show various properties of the expanded beads of the Examples, Comparative Examples, and Reference Examples. The methods for evaluating the various properties shown in Tables 2 to 4 are as follows.

(Evaluation of expanded bead)

In the measurement and evaluation of physical properties of the expanded beads, expanded beads that had been left to stand under conditions of a relative humidity of 50%, 23°C, and 1 atm for 24 hours to be conditioned were used.

[Bulk density]

The expanded beads after conditioning were filled in a measuring cylinder so as to be naturally deposited, and the bulk volume (unit: L) of the expanded bead group was read from the scale of the measuring cylinder. Thereafter, the mass (unit: g) of the expanded bead group in the measuring cylinder was divided by the above-mentioned bulk volume, and furthermore subjected to unit conversion, thereby calculating the bulk density (unit: $kg/m^3$) of the expanded bead.

[Apparent density]

The expanded bead group after conditioning was subjected to mass measurement, and then immersed in ethanol at a temperature of 23°C contained in a measuring cylinder using a wire mesh. Taking into account the volume of the wire mesh, the volume of the expanded bead group was determined from the increase in the liquid level. The mass (unit: g) of the expanded bead group thus obtained was divided by the volume (unit: L), and then subjected to unit conversion, thereby calculating the apparent density of the expanded bead (unit: $kg/m^3$). The value obtained by dividing the apparent density of the expanded bead by the bulk density is described in the column "Apparent density/Bulk density" in Tables 2 to 4.

[Closed cell content]

The method for measuring the closed cell content of the expanded bead is as described above.

[Average hole diameter d of through-hole]

One hundred expanded beads were randomly selected from the expanded bead group after conditioning, and each expanded bead was cut at a position where the cross-sectional area became maximum in a plane perpendicular to the axial direction, thereby exposing a cut surface of the expanded bead. Next, a photograph of the cut surface of each expanded bead was taken, and image analysis was performed to measure the cross-sectional area of the through-hole in the cut surface (namely, opening area). The diameter of a virtual true circle having the same area as the cross-sectional area of the through-hole was calculated, and this value was defined as the hole diameter of the through-hole of the expanded bead. The above operation was performed for the 100 expanded beads, and the arithmetic average value of the resulting hole diameters of the through-holes was defined as the average hole diameter d of the through-hole of the expanded bead.

[Average outer diameter D of expanded bead]

One hundred expanded beads were randomly selected from the expanded bead group after conditioning, and each expanded bead was cut at a position where the cross-sectional area became maximum in a plane perpendicular to the axial direction, thereby exposing a cut surface of the expanded bead. Next, a photograph of the cut surface of each expanded bead was taken, and image analysis was performed to measure the cross-sectional area of the expanded bead including the through-hole (namely, the area of a region surrounded by an outer peripheral edge of the expanded bead in the cut surface). The diameter of a virtual true circle having the same area as the cross-sectional area of the expanded bead was calculated, and this value was defined as the outer diameter of each expanded bead. The above operation was performed for the 100 expanded beads, and the arithmetic average value of the resulting outer diameters of the expanded beads was defined as the average outer diameter D of the expanded bead. A value obtained by dividing the average hole diameter d of the through-hole by the average outer diameter D of the expanded bead is described in the column "d/D" in Tables 2 to 4.

[Average wall thickness t of expanded bead]

Using the average hole diameter d of the through-hole and the average outer diameter D of the expanded bead obtained by the above methods, the average wall thickness t of the expanded bead was calculated based on the following Formula (3).

$$t = (D - d)/2 \qquad ...(3)$$

[Aspect ratio L/D of expanded bead]

The lengths in the axial directions of 100 expanded beads randomly selected were measured with a caliper and arithmetically averaged to determine the average length L in the axial direction. The resulting average length L of the expanded bead in the axial direction was divided by the average outer diameter D of the expanded bead to determine the aspect ratio L/D of the expanded bead.

[Presence or absence and area ratio of groove]

The following method was used to determine whether or not a groove extending in the axial direction was present on the side peripheral surface of the expanded bead. Specifically, the expanded bead was cut at a position where the cross-sectional area became maximum in a plane perpendicular to the axial direction, thereby exposing a cut surface of the expanded bead. Next, a photograph of the cut surface of the expanded bead was taken, and the resulting cross sectional image was observed. When the profile of the expanded bead on the cross section image included a portion recessed inward relative to its surroundings, it was determined that a groove was present. When no such recessed portion was observed, it was determined that no groove was present. For the expanded beads having a groove on their side peripheral surfaces, the area ratio of the groove was calculated by the following method.

First, 100 expanded beads were randomly selected from the expanded bead group after conditioning, and each expanded bead was cut at a position where the cross-sectional area became maximum in a plane perpendicular to the axial direction, thereby exposing a cut surface of the expanded bead. Next, a photograph of the cut surface of each expanded bead was taken, and image analysis was performed to measure the cross-sectional area of the expanded bead excluding the through-hole and the total cross-sectional area of the groove. Using these values, the ratio (unit: %) of the total cross-sectional area of the groove to the cross-sectional area of the expanded bead excluding the through-hole was calculated for each expanded bead. The method for calculating the total cross-sectional area of the grooves was as described above.

The above operation was performed for the 100 expanded beads, and the arithmetic average value of the above ratios in these expanded beads was defined as the area ratio of the groove.

[Average circularity Cp of through-hole]

One hundred expanded beads were randomly selected from the expanded bead group after conditioning, and each expanded bead was cut at a position where the cross-sectional area became maximum in a plane perpendicular to the axial direction, thereby exposing a cut surface of the expanded bead. Next, a photograph of the cut surface of each expanded bead was taken, and image analysis was performed to measure the cross-sectional area $S_p$ and the perimeter length $L_p$ of the through-hole of each expanded bead. Using these values, the circularity of the through-hole of each expanded bead was calculated based on the following Formula (1).

$$\text{Circularity of through-hole} = 4\pi S_p/(L_p \times L_p) \;...\; (1)$$

The arithmetic average value of the resulting circularities of the through-holes of the 100 expanded beads was defined as the average circularity Cp of the through-hole.

[Average circularity Cb of outer peripheral edge of expanded bead]

One hundred expanded beads were randomly selected from the expanded bead group after conditioning, and each expanded bead was cut at a position where the cross-sectional area became maximum in a plane perpendicular to the axial direction, thereby exposing a cut surface of the expanded bead. Next, a photograph of the cut surface of each expanded bead was taken, and image analysis was performed to measure the cross-sectional area $S_b$, which includes the through-hole, of each expanded bead, and the perimeter length $L_b$ of the outer peripheral edge of each expanded bead. Using these values, the circularity of the outer peripheral edge of each expanded bead was calculated based on the following Formula (2).

$$\text{Circularity of outer peripheral edge of expanded bead} = 4\pi S_b/(L_b \times L_b) \;...\; (2)$$

The arithmetic average value of the resulting circularities of the outer peripheral edges of the 100 expanded beads was defined as the average circularity Cb of the outer peripheral edge of the expanded bead. In Tables 2 to 4, the value obtained by dividing the average circularity Cb of the outer peripheral edge of the expanded bead by the average circularity Cp of the through-hole is described in the column "Ratio Cb/Cp of circularity", and the absolute value of the difference between the average circularity Cb of the outer peripheral edge of the expanded bead and the average circularity Cp of the through-hole is described in the column "Absolute value |Cp - Cb| of difference between circularities".

(Evaluation of molded article)

Using the expanded beads of each of the Examples, Comparative Examples and Reference Examples, molded articles were produced by the following method. First, the expanded beads were dried at 23°C for 24 hours, and then impregnated with air to apply the internal pressure shown in Tables 2 to 4 to the expanded beads. Next, the expanded beads were filled into a flat-plate mold having dimensions of 300 mm length × 250 mm width × 60 mm thickness by a cracking filling method. The amount of cracking (specifically, the ratio of the amount of opening of the mold to the inner dimension in the thickness direction) during filling was set to 10% (namely, 6 mm). After the filling was completed, the mold was clamped in the thickness direction to mechanically compress the expanded beads.

Next, steam was supplied to the mold to perform in-mold molding. In the in-mold molding, first, steam was supplied into the mold for 5 seconds while a drain valve of the mold was open to perform preheating. Next, the drain valve was closed, and steam was supplied from one surface side of the mold to perform first one-way heating until the pressure reached a pressure lower by 0.08 MPa(G) than the molding pressure during main heating. Next, steam was supplied from the other surface side of the mold to perform second one-way heating until the pressure reached a pressure lower by 0.04 MPa(G) than the molding pressure during main heating. Thereafter, steam was supplied from both surfaces of the mold to perform main heating until the pressure reached the molding pressure during main heating as shown in Tables 2 to 4. After the main heating was completed, the pressure in the mold was released, and the molded article was cooled with water in the mold until the surface pressure due to expansion force of the molded article reached 0.04 MPa(G). The time required for cooling in the mold is shown in the column "Cooling time" in Tables 2 to 4. The molding pressure during the main heating was set so that the density of the molded article was approximately 30 kg/m³, except in Example 2.

Thereafter, an aging step was performed in which the expanded beads molded article taken out from the mold was left to stand in an oven at 80°C for 12 hours. After the aging step, the expanded beads molded article was left to stand under the conditions of a relative humidity of 50%, 23°C, and 1 atm for 24 hours, and then the properties were evaluated.

[Density of molded article]

The mass (unit: g) of the molded article was divided by the volume (unit: L) obtained from the outer dimension of the molded article, and thereafter subjected to unit conversion, thereby calculating the density (unit: $kg/m^3$) of the molded article.

[50% compression stress $\sigma_{50}$]

A test piece having a rectangular prism shape of 50 mm length $\times$ 50 mm width $\times$ 25 mm thickness and not including a skin surface, namely, a surface that was in contact with the inner surface of the mold during in-mold molding, was cut out from the central portion of the molded article. A compression test was performed at a compression rate of 10 mm/min in accordance with JIS K6767: 1999 to determine the 50% compression stress $\sigma_{50}$ (unit: kPa) of the molded article.

[Appearance]

(Surface properties)

The surface of the molded article was observed, and the surface properties were evaluated based on the following criteria.

A: The surface of the molded article exhibited a good surface condition in which gaps between beads were few and unevenness due to the through-hole or the like was inconspicuous.
B: Gaps between beads and/or unevenness due to the through-hole or the like were slightly observed on the surface of the molded article.
C: Gaps between beads and/or unevenness due to the through-hole or the like were remarkably observed on the surface of the molded article.

(Number of streak patterns and its evaluation)

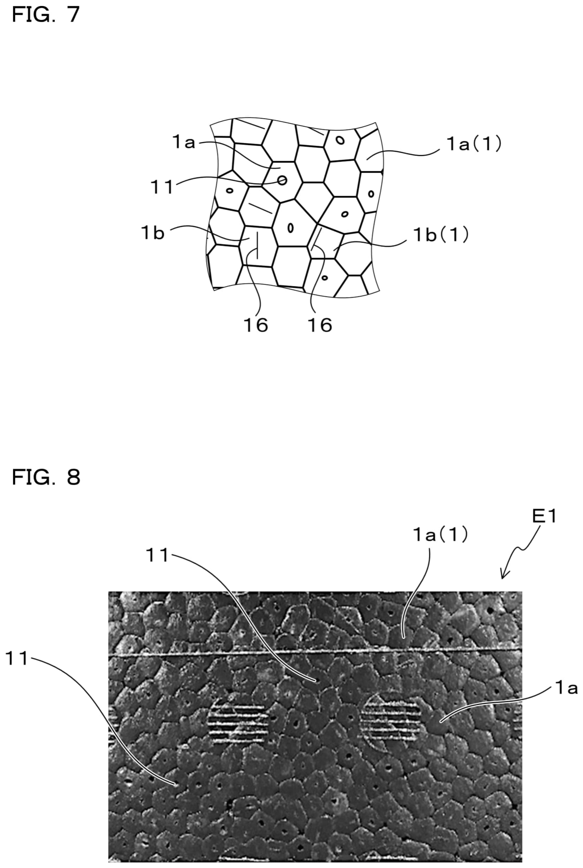

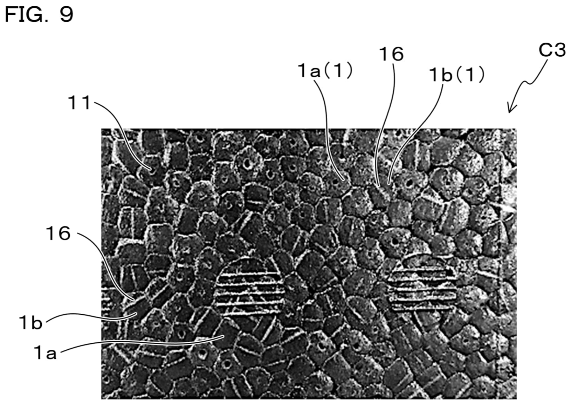

On the central portion of the surface of the molded article having a size of 300 mm length $\times$ 250 mm width, an observation region in the form of a square with each side of 5 cm was set. The surfaces of the expanded beads present in the observation region were visually observed, and the number of streak patterns formed on the expanded beads was counted. FIG. 7 schematically shows an example of the observation region. FIG. 8 shows a photograph of the surface of molded article E1 obtained by using the expanded beads of Example 1, and FIG. 9 shows a photograph of the surface of molded article C3 obtained by using the expanded beads of Comparative Example 3. As shown in FIGS. 7 to 9, the surfaces the expanded beads 1a having no streak pattern 16 are substantially smooth. In contrast, as shown in FIG. 7 and FIG. 9, streak patterns 16 are observed as a straight-line-shaped pattern passing through the surface of the expanded bead 1b and having a lighter color than the surroundings. It is noted that through-holes 11 sometimes appeared on the surfaces of the expanded beads 1 within the observation region.
The number of streak patterns (unit: patterns/25 $cm^2$) appeared in the observation region was shown in the column "Number of streak patterns" in Tables 2 to 4. Based on the number of streak patterns observed, evaluation was performed according to the following criteria.

A: A number of streak patterns was less than 10/25 $cm^2$
B: A number of streak patterns was 10/25 $cm^2$ or more and less than 60/25 $cm^2$
C: A number of streaks was 60/25 $cm^2$ or more

[Table 2]

(Table 2)

| | | | Unit | Example 1 | Example 2 | Example 3 | Example 4 | Example 5 | Example 6 |
|---|---|---|---|---|---|---|---|---|---|
| Resin particle | Foamed core layer | Type of resin | - | PP1 | PP1 | PP2 | PP1 | PP1 | PP1 |
| | | $MFR_C$ | g/10 min | 8 | 8 | 7 | 8 | 8 | 8 |
| | | Blenging Amount of CB | mass% | 2.7 | 2.7 | 2.7 | 2.7 | 1.0 | 4.0 |
| | Cover layer | Type of resin | - | PP3 | PP3 | PP3 | PE1 | PP3 | PP3 |
| | | MFRs | g/10 min | 22 | 22 | 22 | 34 | 22 | 22 |
| | | Blenging Amount of CB | mass% | 2.7 | 2.7 | 2.7 | 2.7 | 1.0 | 4.0 |
| | Difference of MFR MFRs-MFRc | | g/10 min | 14 | 14 | 15 | 26 | 14 | 14 |
| | Ratio of MFR $MFR_S/MFR_C$ | | - | 2.8 | 2.8 | 3.2 | 4.2 | 2.8 | 2.8 |
| First expanding step | Foaming temperature | | °C | 150.1 | 150.1 | 159.1 | 150.1 | 150.1 | 150.1 |
| | Pressure in container | | MPa(G) | 2.6 | 2.6 | 2.2 | 2.6 | 2.6 | 2.7 |
| Second expanding step | Internal pressure of first-step expanded bead | | MPa(G) | 0.5 | 0.5 | 0.5 | 0.5 | 0.5 | 0.5 |
| | Drum pressure | | MPa(G) | 0.06 | 0.08 | 0.07 | 0.06 | 0.06 | 0.07 |

| | | | Unit | Example 1 | Example 2 | Example 3 | Example 4 | Example 5 | Example 6 |
|---|---|---|---|---|---|---|---|---|---|
| Expanded bead | Bulk density | | kg/m$^3$ | 25.0 | 20.0 | 25.3 | 25.5 | 25.3 | 24.8 |
| | Apparent density | | kg/m$^3$ | 44.5 | 34.9 | 45.3 | 45.0 | 45.0 | 44.3 |
| | Apparent density/ Bulk dens ity | | - | 1.78 | 1.75 | 1.79 | 1.76 | 1.78 | 1.79 |
| | Closed cell content | | % | 98 | 97 | 98 | 98 | 98 | 98 |
| | Presence or absence of through-hole | | - | Presence | Presence | Presence | Presence | Presence | Presence |
| | Average hole diameter d of through-hole | | mm | 0.69 | 0.75 | 0.70 | 0.73 | 0.72 | 0.70 |
| | Average outer diameter D of expanded bead | | mm | 3.50 | 4.05 | 3.55 | 3.60 | 3.52 | 3.55 |
| | d/D | | - | 0.20 | 0.19 | 0.20 | 0.20 | 0.20 | 0.20 |
| | Average wall thickness t of expanded bead | | mm | 1.41 | 1.65 | 1.43 | 1.44 | 1.40 | 1.41 |
| | Aspect ratio L/D | | - | 1.1 | 1.0 | 1.1 | 1.0 | 1.0 | 1.1 |
| | Presence or absence of groove | | - | Absence | Absence | Absence | Absence | Absence | Absence |
| | Area ratio of groove | | % | - | - | - | - | - | - |
| | Average circularity Cp of through-hole | | - | 0.966 | 0.971 | 0.961 | 0.968 | 0.966 | 0.970 |
| | Average circularity Cb of outer peripheral edge of expanded bead | | - | 0.971 | 0.968 | 0.965 | 0.964 | 0.961 | 0.967 |
| | Ratio Cb/Cp of circularity | | - | 1.01 | 1.00 | 1.00 | 1.00 | 0.99 | 1.00 |
| | Absolute value \|Cp - Cb\| of difference between circularities | | - | 0.005 | 0.003 | 0.004 | 0.004 | 0.005 | 0.003 |
| Molding conditions | Internal pressure of bead | | MPa(G) | 0.1 | 0.1 | 0.1 | 0.1 | 0.1 | 0.1 |
| | Cooling time | | sec | 0 | 0 | 0 | 0 | 0 | 0 |
| | Molding pressure | | MPa(G) | 0.22 | 0.22 | 0.22 | 0.22 | 0.22 | 0.22 |
| Molded article | Density | | kg/m$^3$ | 29 | 24 | 30 | 30 | 30 | 29 |
| | 50% compression stress $\sigma_{50}$ | | kPa | 227 | 180 | 264 | 228 | 225 | 225 |
| | Surface properties | | - | A | A | A | A | A | A |
| | Streak pattern | Number | patterns/ 25 cm$^2$ | 2 | 4 | 2 | 3 | 3 | 2 |
| | | Evaluation | - | A | A | A | A | A | A |

[Table 3]

(Table 3)

| | | | Unit | Comparative Example 1 | Comparative Example 2 | Comparative Example 3 | Comparative Example 4 |
|---|---|---|---|---|---|---|---|
| Resin particle | Foamed core layer | Type of resin | - | PP1 | PP1 | PP1 | PP1 |
| | | MFRc | g/10 min | 8 | 8 | 8 | 8 |
| | | Blenging Amount of CB | mass% | 2.7 | 2.7 | 2.7 | 2.7 |
| | Cover layer | Type of resin | - | - | PP4 | PP5 | PE2 |
| | | MFR$_S$ | g/10 min | - | 10 | 6 | 7 |
| | | Blenging Amount of CB | mass% | - | 2.7 | 2.7 | 2.7 |
| | Difference of MFR MFR$_S$-MFR$_C$ | | g/10 min | - | 2 | -2 | -1 |
| | Ratio of MFR MFR$_S$/MFR$_C$ | | - | - | 1.3 | 0.7 | 0.9 |
| First expanding step | Foaming temperature | | °C | 150.2 | 150.1 | 150.1 | 150.1 |
| | Pressure in container | | MPa(G) | 2.5 | 2.6 | 2.6 | 2.6 |
| Second expanding step | Internal pressure of first-step expanded bead | | MPa(G) | 0.5 | 0.5 | 0.5 | 0.5 |
| | Drum pressure | | MPa(G) | 0.06 | 0.06 | 0.06 | 0.06 |

(continued)

|  |  |  | Unit | Comparative Example 1 | Comparative Example 2 | Comparative Example 3 | Comparative Example 4 |
|---|---|---|---|---|---|---|---|
| Expanded bead | | Bulk density | kg/m$^3$ | 25.0 | 25.3 | 25.1 | 25.3 |
| | | Apparent density | kg/m$^3$ | 45.0 | 45.1 | 44.9 | 45.0 |
| | | Apparent density/ Bulk density | - | 1.80 | 1.78 | 1.79 | 1.78 |
| | | Closed cell content | % | 98 | 98 | 98 | 98 |
| | | Presence or absence of through-hole | - | Presence | Presence | Presence | Presence |
| | | Average hole diameter d of through-hole | mm | 0.60 | 0.58 | 0.56 | 0.55 |
| | | Average outer diameter D of expanded bead | mm | 3.58 | 3.55 | 3.50 | 3.52 |
| | | d/D | - | 0.17 | 0.16 | 0.16 | 0.16 |
| | | Average wall thickness t of expanded bead | mm | 1.49 | 1.48 | 1.47 | 1.49 |
| | | Aspect ratio L/D | - | 1.0 | 1.1 | 1.0 | 1.0 |
| | | Presence or absence of groove | - | Presence | Presence | Presence | Presence |
| | | Area ratio of groove | % | 1.97 | 1.91 | 1.46 | 1.40 |
| | | Average circularity Cp of through-hole | - | 0.970 | 0.966 | 0.984 | 0.965 |
| | | Average circularity Cb of outer peripheral edge of expanded bead | - | 0.896 | 0.919 | 0.900 | 0.914 |
| | | Ratio Cb/Cp of circularity | - | 0.92 | 0.95 | 0.91 | 0.95 |
| | | Absolute value \|Cp - Cb\| of difference between circularities | - | 0.074 | 0.047 | 0.084 | 0.051 |
| Molding conditions | | Internal pressure of bead | MPa(G) | 0.1 | 0.1 | 0.1 | 0.1 |
| | | Cooling time | sec | 40 | 0 | 0 | 0 |
| | | Molding pressure | MPa(G) | 0.26 | 0.22 | 0.22 | 0.22 |
| Molded article | | Density | kg/m$^3$ | 30 | 29 | 29 | 30 |
| | | 50% compression stress $\sigma_{50}$ | kPa | 228 | 225 | 224 | 227 |
| | | Surface properties | - | A | A | A | A |
| | Streak pattern | Number | patterns/25 cm$^2$ | 80 | 55 | 73 | 50 |
| | | Evaluation | - | C | B | C | B |

[Table 4]

(Table 4)

| | | | Unit | Reference Example 1 | Reference Example 2 | Reference Example 3 |
|---|---|---|---|---|---|---|
| Resin particle | Foamed core layer | Type of resin | - | PP1 | PP1 | PP1 |
| | | MFRc | g/10min | 8 | 8 | 8 |
| | | Blenging Amount of CB | mass% | 2.7 | 2.7 | 0 |
| | Cover layer | Type of resin | - | PP5 | PP5 | PP5 |
| | | MFRs | g/10 min | 6 | 6 | 6 |
| | | Blenging Amount of CB | mass% | 2.7 | 2.7 | 0 |
| | Difference of MFR MFRs-MFRc | | g/10 min | -2 | -2 | -2 |
| | Ratio of MFR MFRs/MFRc | | - | 0.7 | 0.7 | 0.8 |
| First expanding step | Foaming temperature | | °C | 150.3 | 150.3 | 150.1 |
| | Pressure in container | | MPa(G) | 2.3 | 2.5 | 2.6 |
| Second expanding step | Internal pressure of first-step expanded bead | | MPa(G) | 0.5 | 0.5 | 0.5 |
| | Drum pressure | | MPa(G) | 0.05 | 0.05 | 0.05 |
| Expanded bead | Bulk density | | kg/m$^3$ | 25.0 | 25.3 | 25.1 |
| | Apparent density | | kg/m$^3$ | 51.0 | 41.0 | 44.8 |
| | Apparent density/ Bulk density | | - | 2.04 | 1.62 | 1.78 |
| | Closed cell content | | % | 97 | 99 | 98 |
| | Presence or absence of through-hole | | - | Presence | Absence | Presence |
| | Average hole diameter d of through-hole | | mm | 1.55 | - | 0.5 |
| | Average outer diameter D of expanded bead | | mm | 3.56 | 3.71 | 3.67 |
| | d/D | | - | 0.44 | - | 0.14 |
| | Average wall thickness t of expanded bead | | mm | 1.01 | - | 1.585 |
| | Aspect ratio L/D | | - | 1.1 | 1.0 | 1.0 |
| | Presence or absence of groove | | - | Absence | Absence | Presence |
| | Area ratio of groove | | % | - | - | 0.52 |
| | Average circularity Cp of through-hole | | - | 0.978 | - | 0.965 |
| | Average circularity Cb of outer peripheral edge of expanded bead | | - | 0.975 | 0.975 | 0.935 |
| | Ratio Cb/Cp of circularity | | - | 1.00 | - | 0.97 |
| | Absolute value \|Cp - Cb\| of difference between circularities | | - | 0.003 | - | 0.03 |

27

(continued)

| | | | Unit | Reference Example 1 | Reference Example 2 | Reference Example 3 |
|---|---|---|---|---|---|---|
| Molding conditions | Internal pressure of bead | | MPa(G) | 0.1 | 0.1 | 0.1 |
| | Cooling time | | sec | 0 | 80 | 0 |
| | Molding pressure | | MPa(G) | 0.22 | 0.28 | 0.22 |
| Molded article | Density | | kg/m$^3$ | 29 | 30 | 30 |
| | 50% compression stress σ50 | | kPa | 200 | 233 | 226 |
| | Surface properties | | - | C | A | A |
| | Streak pattern | Number | patterns/25 cm$^2$ | 4 | 0 | 0 |
| | | Evaluation | - | A | A | A |

As shown in Table 2, the expanded beads of Examples 1 to 6 each had a tubular shape with a through-hole, and the average hole diameter d of the through-hole and the ratio d/D of the average hole diameter d of the through-hole and the average outer diameter D of the expanded bead fell within the specified ranges. The expanded beads of these Examples each had a foamed core layer and a cover layer covering the foamed core layer, and the melt mass flow rate MFR$_S$ of the polyolefin-based resin constituting the cover layer fell within the specified range. Therefore, by performing in-mold molding using the expanded beads of these Examples, the formation of streak patterns on a surface of the molded article was suppressed, and the molded article having a good appearance was obtained. In addition, by using the expanded beads of these Examples, the water-cooling time was shortened and the productivity of the molded article was improved.

In contrast, as shown in Table 3, the expanded bead of Comparative Example 1 had no cover layer, and therefore streak patterns were easily formed on the surface of the molded article. In addition, when the expanded bead of Comparative Example 1 was used, the water-cooling time was long.

The cover layers of the expanded beads of Comparative Examples 2 to 4 were made of polyolefin-based resins having a melt mass flow rates MFR$_S$ lower than the specified range. Therefore, streak patterns were easily formed on the surfaces of the molded articles.

As shown in Table 4, the average hole diameter d of the through-hole of the expanded bead of Reference Example 1 was larger than the specified range. The expanded bead of Reference Example 2 had no through-hole. As shown in Table 4, almost no streak patterns were formed on the surface of the molded articles obtained from the expanded beads of these Reference Examples, although the melt flow rate of the polyolefin-based resins constituting the cover layers were lower than the specified range. Accordingly, from a comparison of Examples 1 to 6 and Comparative Examples 1 to 4 with Reference Examples 1 to 2, it can be understood that the phenomenon of formation of streak patterns on the surface of the molded article is a specific to molded articles obtained from expanded beads having a through-hole in which the average hole diameter d falls within the specified range. It is noted that the expanded bead of Reference Example 1 had an excessive large average hole diameter of the through-hole, and therefore provided a molded article having inferior surface properties. The expanded bead of Reference Example 2 had no through-hole, and therefore a molding pressure was high.

The expanded bead of Reference Example 3 contained no coloring pigment. As shown in Table 4, almost no streak patterns were observed on the surface of the molded article obtained from the expanded bead of this Reference Example, although the melt flow rate of the polyolefin-based resin constituting the cover layer was lower than the specified range. This is considered to be because, for example, the area ratio of the groove in the expanded bead was relatively small, and no streak pattern was observed because the beads were white. Accordingly, from a comparison of Examples 1 to 6 and Comparative Examples 1 to 4 with Reference Example 3, it can be understood that the phenomenon of formation of streak patterns on the surface of the molded article is more likely to occur when an expanded bead containing carbon black as a colorant is molded.

Although the specific aspects of the polypropylene-based resin expanded bead and the method for producing the same according to the present invention have been described above on the basis of Examples, the specific aspect of the polypropylene-based resin expanded bead and the method for producing the same according to the present invention is not limited to the aspects of Examples, and the configurations can be appropriately modified as long as the gist of the present invention is not impaired.

# EP 4 711 405 A1

**Claims**

1. A polypropylene-based resin expanded bead having a tubular shape with a through-hole that penetrates through an inside in an axial direction thereof, wherein

    an average hole diameter d of the through-hole of the expanded bead is less than 1 mm,
    a ratio d/D of the average hole diameter d of the through-hole to an average outer diameter D of the expanded bead is 0.4 or less,
    the expanded bead has

    a foamed core layer made of a polypropylene-based resin, and
    a cover layer made of a polyolefin-based resin and covering a side peripheral surface of the foamed core layer,

    the foamed core layer and the cover layer each contain a coloring pigment, and
    a melt mass flow rate $MFR_S$ of the polyolefin-based resin constituting the cover layer, as measured under conditions of a temperature of 230°C and a load of 2.16 kg in accordance with JIS K7210-1: 2014, is higher than 15 g/10 min.

2. The polypropylene-based resin expanded bead according to claim 1, wherein an average circularity Cb of an outer peripheral edge of the expanded bead is 0.95 or more in a cut surface obtained by cutting the expanded bead at a position where the expanded bead has a maximum cross-sectional area in a plane perpendicular to the axial direction.

3. The polypropylene-based resin expanded bead according to claim 1 or 2, wherein an amount of the coloring pigment contained in the foamed core layer is 0.1 mass% or more and 5 mass% or less, and an amount of the coloring pigment contained in the cover layer is 0.1 mass% or more and 5 mass% or less.

4. The polypropylene-based resin expanded bead according to any one of claims 1 to 3, wherein the coloring pigment contained in the foamed core layer is carbon black, and the coloring pigment contained in the cover layer is carbon black.

5. The polypropylene-based resin expanded bead according to any one of claims 1 to 4, wherein a melt mass flow rate $MFR_C$ of the polypropylene-based resin constituting the foamed core layer, as measured under conditions of a temperature of 230°C and a load of 2.16 kg in accordance with JIS K7210-1: 2014, is 5 g/min or more and 12 g/min or less.

6. The polypropylene-based resin expanded bead according to any one of claims 1 to 5, wherein a ratio $MFR_S/MFR_C$ of the melt mass flow rate $MFR_S$ of the polyolefin-based resin constituting the cover layer to a melt mass flow rate $MFR_C$ of the polypropylene-based resin constituting the foamed core layer, as measured under conditions of a temperature of 230°C and a load of 2.16 kg in accordance with JIS K7210-1: 2014, is 2 or more and 5 or less.

7. The polypropylene-based resin expanded bead according to any one of claims 1 to 6, wherein an average wall thickness t of the expanded bead is 1.2 mm or more and 2 mm or less.

8. The polypropylene-based resin expanded bead according to any one of claims 1 to 7, wherein an apparent density of the expanded bead is 10 kg/m$^3$ or more and 100 kg/m$^3$ or less.

9. The polypropylene-based resin expanded bead according to any one of claims 1 to 8, wherein an average circularity Cp of the through-hole is 0.90 or more in a cut surface obtained by cutting the expanded bead at a position where the expanded bead has a maximum cross-sectional area in a plane perpendicular to the axial direction.

10. The polypropylene-based resin expanded bead according to any one of claims 1 to 9, wherein, in a cut surface obtained by cutting the expanded bead at a position where the expanded bead has a maximum cross-sectional area in a plane perpendicular to the axial direction, a ratio Cb/Cp of an average circularity Cb of an outer peripheral edge of the expanded bead to an average circularity Cp of the through-hole of the expanded bead is 0.96 or more and 1.05 or less.

11. A method for producing a polypropylene-based resin expanded bead having a tubular shape with a through-hole that penetrates through an inside in an axial direction thereof, the method comprising:

a granulation step of obtaining a multilayer resin particle comprising a core layer made of a polypropylene-based resin and having a tubular shape with a through-hole that penetrates through an inside in an axial direction thereof, and a cover layer made of a polyolefin-based resin and covering a side peripheral surface of the core layer; and

a foaming step of foaming the multilayer resin particle to obtain the expanded bead, after the granulation step, wherein

an average hole diameter dr of the through-hole of the multilayer resin particle is less than 0.25 mm,

a ratio dr/Dr of the average hole diameter dr of the through-hole to an average outer diameter Dr of the multilayer resin particle is 0.4 or less,

the core layer and the cover layer each contain a coloring pigment, and

a melt mass flow rate $MFR_S$ of the polyolefin-based resin constituting the cover layer, as measured under conditions of a temperature of 230°C and a load of 2.16 kg in accordance with JIS K7210-1: 2014, is higher than 15 g/10 min.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/JP2024/012704** |

### A. CLASSIFICATION OF SUBJECT MATTER

*C08J 9/16*(2006.01)i
FI: C08J9/16 CES

According to International Patent Classification (IPC) or to both national classification and IPC

### B. FIELDS SEARCHED

Minimum documentation searched (classification system followed by classification symbols)

C08J9/00-9/42; B29C44/00-44/60;67/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2023/063081 A1 (JSP CORP.) 20 April 2023 (2023-04-20)<br>entire text | 1-11 |
| A | JP 2022-127578 A (JSP CORP.) 31 August 2022 (2022-08-31)<br>entire text | 1-11 |
| A | WO 2021/157369 A1 (JSP CORP.) 12 August 2021 (2021-08-12)<br>entire text | 1-11 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012704**

| Patent document cited in search report | | | Publication date (day/month/year) | Patent family member(s) | | | Publication date (day/month/year) |
|---|---|---|---|---|---|---|---|
| WO | 2023/063081 | A1 | 20 April 2023 | JP | 2023-57790 | A | |
| | | | | WO | 2022/191316 | A1 | |
| | | | | EP | 4306582 | A1 | |
| | | | | KR | 10-2023-0157332 | A | |
| | | | | BR | 112023017705 | A | |
| | | | | CN | 116888202 | A | |
| JP | 2022-127578 | A | 31 August 2022 | US | 2022/0267552 | A1 | |
| | | | | EP | 4047043 | A1 | |
| | | | | KR | 10-2022-0118938 | A | |
| | | | | CN | 114957772 | A | |
| WO | 2021/157369 | A1 | 12 August 2021 | US | 2023/0074915 | A1 | |
| | | | | EP | 4101628 | A1 | |
| | | | | KR | 10-2022-0137936 | A | |
| | | | | CN | 115427487 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023057790 A